# FASCICULE DE BREVET EUROPEEN

(11) **EP 3 167 172 B1**
(45) Date de publication et mention de la délivrance du brevet: **15.08.2018**
(21) Numéro de dépôt: 15734159.5
(22) Date de dépôt: 03.07.2015
(51) Int. Cl.: F01N 5/02, F02G 5/00, F28D 15/02

(54) **SYSTEME DE RECUPERATION DE L'ENERGIE DE LA CHALEUR DE GAZ CHAUD(S) ET/OU FUMEE(S), APPLICATION A LA RECUPERATION DE L'ENERGIE DE FUMEES ENCRASSANTES, EN PARTICULIER ISSUES DE MOTEURS THERMIQUES**
VORRICHTUNG ZUR NUTZUNG DER ENERGIE AUS DER WÄRME VON HEISSGAS(EN) UND/ODER DÄMPFEN, ANWENDUNG ZUR WIEDERGEWINNUNG VON ENERGIE AUS RAUCHGASEN, INSBESONDERE VON WÄRMEKRAFTMASCHINEN
SYSTEM FOR RECOVERING THE ENERGY FROM THE HEAT OF HOT GAS(ES) AND/OR FUMES, APPLICATION TO THE RECOVERY OF ENERGY FROM FUMES, IN PARTICULAR FROM HEAT ENGINES

(30) Priorité: 11.07.2014 FR 1456729
(43) Date de publication de la demande: 17.05.2017
(73) Titulaire: Commissariat à l'Énergie Atomique et aux Énergies Alternatives, 75015 Paris (FR)
(72) Inventeur: GRUSS, Jean-Antoine, F-38170 Seyssinet (FR); PARDO, Pierre, F-46000 Cahors (FR)
(74) Mandataire: Nony
(86) Numéro de dépôt international: PCT/EP2015/065266
(87) Numéro de publication internationale: WO 2016/005294

(56) Documents cités:
- WO-A1-2011/025104
- DE-A1-102008 005 334
- DE-A1-102010 015 297
- GB-A- 2 119 169
- US-A1- 2011 061 386

## Description

### Domaine technique

La présente invention concerne un nouveau système de récupération de l'énergie de la chaleur de gaz chaud(s) et/ou de fumée(s).

On précise que dans le cadre de l'invention, on entend par « thermosiphon diphasique », le sens usuel connu de l'homme du métier tel que défini dans la publication [1]. Ainsi, un thermosiphon diphasique est un caloduc qui permet de transférer de la chaleur par évaporation/condensation d'un fluide à l'intérieur d'une enveloppe sans aucune structure capillaire, c'est-à-dire avec un retour des condensats par gravité à l'intérieur de l'enveloppe.

Un caloduc assisté par la gravité [1] est un caloduc dans lequel il existe une structure capillaire, généralement des rainures, et le retour des condensats du condenseur à l'évaporateur est assuré par la gravité, le condenseur du caloduc étant à une position plus élevée que l'évaporateur. La structure capillaire n'a donc pas pour but de ramener les condensats; mais d'améliorer les coefficients d'échange en évaporation et en condensation, et de repousser la limite d'entraînement.

On précise également qu'on entend par «module thermoélectrique» ou module TEC, un module qui, soumis à un gradient de température, génère un courant électrique. Il s'agit donc d'un module que l'on utilise en mode passif, aussi usuellement dénommé module Seebeck qui met en oeuvre l'effet Seebeck.

On précise également qu'on entend par « lit fluidisé », le sens usuel connu de l'homme de l'art, dont le principe consiste à injecter un gaz ou un liquide par dessous dans un lit de matière granulaire, le fluide injecté venant soulever et brasser les grains (particules).

On précise enfin qu'on entend par « cycle thermodynamique de Rankine », le sens usuel connu de l'homme du métier, c'est-à-dire un cycle thermodynamique dont les seules irréversibilités proviennent des échanges de chaleur, avec l'extérieur.

Le cycle de Rankine, parcouru dans le sens moteur, est composé des quatre transformations suivantes: compression adiabatique et réversible (isentropique), vaporisation isobare et irréversible, détente adiabatique et réversible (isentropique) et liquéfaction isobare et irréversible.

Suivant les niveaux de température et de puissance, différents fluides sont dans la pratique utilisés dans les machines thermique mettant en oeuvre un cycle de Rankine: des fluides organiques dans les machines dites ORC (acronyme anglais pour « Organic Rankine Cycle ») ou de l'eau (cycle à vapeur d'eau).

### Etat de la technique

On explicite ci-après différentes notions techniques et certains systèmes de récupérations de l'énergie de chaleur connus permettant de mieux définir et comprendre l'invention.

On connait des systèmes de récupération de l'énergie de la chaleur, dits récupérateurs thermoélectriques, qui génèrent une puissance électrique par effet thermo électrique entre une source chaude, constituée par exemple de fumées et une source froide, constituée par exemple d'un liquide de refroidissement.

Les fumées constituant la source chaude proviennent typiquement de fumées de combustion, par exemple d'un moteur thermique à cycle diesel.

Différents prototypes de récupérateurs thermoélectriques ont été développés principalement par des laboratoires universitaires ou des constructeurs de véhicules automobiles. On peut citer ici les publications [2] et [3] ou les publications de demandes de brevets US2011/0061386A1, DE102010015297A1 ou DE102008005334A1.

A ce jour, à la connaissance des inventeurs, il n'existe pas de produit commercial en récupération d'énergie de puissance supérieure à quelques Watts, qui pourrait être destiné généralement à l'alimentation de capteurs autonomes.

Différentes configurations de récupérateurs thermoélectriques ont été expérimentées.

Tout d'abord, une configuration de type surfacique a été testée avec des modules thermoélectriques agencés à la périphérie d'un canal de fumées en étant en contact surfacique avec ses portions planaires, le refroidissement étant assuré par un liquide ou de l'air.

La demande de brevet JPH11122960A divulgue une telle configuration surfacique avec un refroidissement à l'air.

La demande de brevet WO 2011/011795 divulgue également une configuration surfacique avec en outre une répartition annulaire des modules thermoélectriques tout autour de l'enveloppe d'un tube de gaz d'échappement. Dans cette demande, la configuration surfacique annulaire est rendue possible grâce à la réalisation des modules thermoélectriques sous la forme de plots montés sur des bagues conductrices annulaires en forme de T.

La demande de brevet FR 2972570 divulgue en outre une configuration surfacique planaire avec empilement de sous-ensemble comportant chacun une pluralité de modules thermoélectriques, le refroidissement étant assuré par un liquide.

Le projet mené par le RAVERS (acronyme de « *Research Center for Advanced Hybrid Electric Vehicle Energy Recovery System* ») à l'université nationale de Chungbuk en Corée du sud, utilise des caloducs pour transférer la chaleur extraite d'une canalisation traversée par les gaz d'échappement (source chaude) vers des plaques froides traversées par le fluide de refroidissement. Les modules thermoélectriques sont placés en interface au niveau des plaques froides: voir [4].

L'ensemble des récupérateurs thermoélectriques qui ont été proposés présente tous les mêmes limitations de récupération de l'énergie de la chaleur liées aux résistances thermiques.

En effet, le flux de chaleur traversant les modules thermoélectriques pour toutes les configurations connues de récupérateurs thermoélectriques dépend de la résistance thermique entre le fluide chaud et le fluide froid.

En première approximation, le flux thermique Φ = (Tc-Tf)/Rth, exprimé en Watt (W), avec Rth = Rf + Rc+ RTE et:
Rc : résistance thermique du côté chaud (°C/W);
RTE : résistance thermique interne des modules thermo électriques (°C/W);
Rf : résistance thermique du côté froid (°C/W);
Tc : température moyenne du fluide chaud (°C) ;
Tf : température moyenne du fluide froid (°C).

Afin d'optimiser la puissance électrique récupérée, il faut réaliser une adaptation d'impédance thermique entre la résistance thermique interne des modules thermoélectriques et les résistances thermiques externes, i.e. celles des côtés chaud et froid, comme cela est décrit dans la publication [5]. Ainsi, selon cette optimisation, la relation entre RTE, Rc et Rf s'écrit : RTF ≈ Rc + Rf.

La résistance thermique Rf du côté froid étant généralement très faible, le flux Φ est limité principalement par la résistance thermique côté chaud Rc et ainsi, la relation du flux peut s'écrire Φ ≈ (Tc-Tf) / (2*Rc).

La résistance thermique du côté chaud Rc peut s'exprimer par la relation suivante : Rc = 1 / (h*S*η),
dans laquelle h est le coefficient d'échange gaz/paroi (W/m².°C);
S est la surface d'échange du fluide côté chaud (m²);
et η est l'efficacité de la surface d'échange.

Le coefficient d'échange du fluide (gaz) côté chaud h en convection forcée est relativement mauvais, de l'ordre de 50 W/m².°C.

Le produit S*η, est limité par le développement de surface possible avec les technologies d'échanges par ailettes classiques couplé avec une efficacité d'ailette η.

Par conception, les ailettes ne peuvent pas être trop serrées et l'utilisation de motifs d'intensification classiques (ailettes interrompues, persiennes, ondulées...) risque d'entraîner des problèmes d'encrassement accrus.

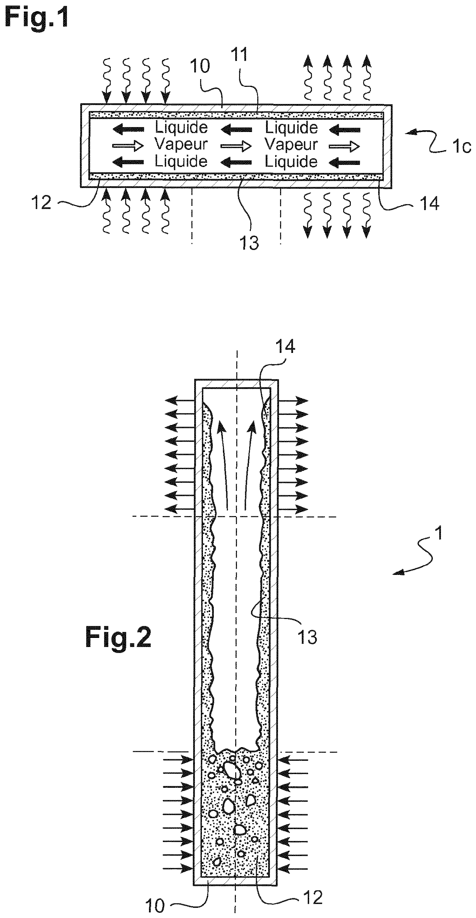

Les caloducs sont des dispositifs qui permettent de transférer de la chaleur par évaporation/condensation d'un fluide à l'intérieur d'une enveloppe : voir publications [1] et [6]. On a représenté schématiquement en figure 1, un caloduc 1C constitué d'une enveloppe 10 comportant une structure interne 11. On distingue usuellement trois zones en fonction la phase du fluide, à savoir l'évaporateur 12, la zone adiabatique 13 et le condenseur 14.

Lorsque la zone chaude 12 (évaporateur) de l'enveloppe est située à un niveau plus élevé que la zone froide 14 (condenseur), ou lorsqu'on travaille sans gravité, en apesanteur par exemple, la structure interne 11 dans l'enveloppe permet de ramener les condensats du condenseur 14 vers l'évaporateur par capillarité.

Un type particulier de caloducs particulièrement simple et performant est appelé « thermosiphon diphasique » et est constitué d'une enveloppe sans aucune structure capillaire 11. On a représenté en figure 2, un thermosiphon diphasique 1 dont l'enveloppe 10 est agencée à la verticale : on retrouve les trois parties précédemment décrites, à savoir l'évaporateur 12, la zone adiabatique 13 et le condenseur 14. Dans un thermosiphon diphasique 1, le retour des condensats du condenseur 14 vers l'évaporateur 12 s'effectue par gravité, comme illustré en figure 2, ce qui nécessite donc que la partie chaude (évaporateur) soit située à un niveau en dessous de la partie froide (condenseur) pour fonctionner.

Différents types de fluides et d'enveloppes peuvent être envisagés pour la réalisation d'un thermosiphon diphasique suivant la gamme de température visée. En particulier, les thermosiphons à eau ont des performances thermiques très intéressantes dans la gamme de fonctionnement de 50 à 300°C.

Les enveloppes couramment utilisées, compatibles avec un fonctionnement avec de l'eau sont en cuivre. Compte tenu des contraintes de pression et de corrosion internes et externes, des thermosiphons à eau, à enveloppe bimétallique en cuivre/acier noir ou inoxydable ont été développés. Malgré des problèmes de durée de vie dus à la génération d'incondensables, des procédés permettant de réaliser des thermosiphons avec des enveloppes en acier noir ou acier inoxydable sont connues de l'homme de l'art : voir publications [6], [7].

Il est connu des échangeurs de chaleur fonctionnant en lit fluidisé, qui permettent d'augmenter le coefficient d'échange entre un gaz et des structures d'échanges thermiques.

Cette augmentation résulte d'un échange thermique amélioré d'une part entre le gaz et les particules du fait d'une surface d'échange très élevée, d'autre part entre les particules et les structures d'échange du fait du contact solide/solide entre ces éléments.

Typiquement, on améliore d'un facteur de 5 à 10, le coefficient d'échange par rapport à un échange entre un gaz et une paroi, soit de l'ordre de 50 à 500 W/m².°C : voir publications [8], [9].

Par ailleurs, il est connu que lorsqu'on utilise des fumées encrassantes, il se produit un auto-nettoyage des surfaces d'échange du fait de l'action mécanique des particules du lit fluidisé sur les dépôts d'encrassement éventuels : voir publication [10].

Différents caloducs, voire des thermosiphons diphasiques ont déjà été utilisés en lit fluidisé.

Ainsi, le brevet US 4380154 divulgue une combustion en lit fluidisé pour un cycle à gaz. Des caloducs sont ainsi plongés verticalement dans le lit fluidisé et transfèrent la chaleur dans une partie froide pour réchauffer la partie chaude d'un cycle à gaz. L'intérêt d'utiliser des thermosiphons diphasiques selon ce brevet est de bénéficier d'une double étanchéité et donc de minimiser le risque d'envoyer des particules abrasives dans les machines tournantes du cycle à gaz. En effet, en cas de percement d'un tube avec un échangeur direct dans le lit de particules, une détérioration catastrophique du cycle à gaz serait causée.

Le brevet US 7087097 divulgue le transfert thermique par des caloducs agencés à l'horizontal, entre un lit fluidisé en combustion et un lit fluidisé de gazéification. Les caloducs permettent d'éviter une injection directe de vapeur surchauffée ou de gaz chauds, ce qui aurait pour effet de diminuer le rendement du procédé.

Le brevet US 4160720 concerne un réacteur de traitement de sables bitumineux. Des thermosiphons diphasiques agencés à la verticale transmettent la chaleur entre deux lits fluidisés superposés, un lit de combustion en partie inférieure et un lit de pyrolyse en partie supérieure. Les thermosiphons diphasiques permettent de transférer la chaleur entre les deux lits tout en isolant leur atmosphère respective.

Le brevet US 4474230 concerne des lits fluidisés avec réaction chimique. La chaleur est transférée par des caloducs d'un brûleur vers les lits fluidisés réactifs. L'intérêt premier des caloducs est dans ce brevet d'obtenir une température homogène dans le lit, ce qui peut être intéressant pour des réactions endothermiques. Inversement, un lit réactif exothermique peut être contrôlé par des caloducs en transférant la chaleur générée.

Des réacteurs chimiques fonctionnant en lit fluidisé réactif sont connus. Ils permettant notamment la dépollution par élimination des NOx (NO, NO₂ et N₂O) et du CO grâce à des catalyseurs adaptés dans le lit, comme cela est par exemple décrit dans la demande de brevet EP 1296028.

Le brevet US 5750084 concerne la dépollution de gaz contenant des NOx et de l'O₂ en excès dans un lit fluidisé. Afin d'exacerber la réaction et diminuer le temps de séjour, on peut utiliser un lit centrifuge. Des particules de carbone sont utilisées dans le lit fluidisé pour réaliser la dépollution. Pour des gaz de combustion ne comprenant pas de carbone, on introduit des particules de carbone dans le lit. Ces particules viennent adhérer aux particules du lit. Le NO est absorbé sur la surface des particules et oxydé en NO₂, et le NO₂ est ensuite décomposé en CO₂ et N₂ par réduction des particules de carbone. Le diamètre préféré des particules est typiquement de 0,1 micron, et sont adhérentes sur des particules de lit de diamètre préféré de l'ordre de 50 microns. Les inventeurs de l'invention selon ce brevet stipulent que les particules de carbone ne doivent pas dépasser 3 microns. Plus généralement, le diamètre des particules du lit doit être compris entre 30 microns et 500 microns. En dessous de 30 microns, le lit est instable, et il se produit un phénomène dit de renardage, selon lequel le gaz tente de se frayer un chemin mais creuse un canal au travers du lit sans pour autant soulever les particules. Au-dessus de 500 microns, on peut avoir des phénomènes d'abrasion et de vibrations.

On peut classer en quatre catégories de matériaux de base, ceux qui ont été testés en tant que catalyseurs pour les réactions chimiques de dépollution:
- les oxydes métalliques de base qui composent le matériau de base TiO₂ ainsi que les composants actifs tels que le vanadium, le tungstène, le molybdène. Dans la plupart des cas, de l'oxyde de vanadium (V₂O₅) est utilisé avec des petites quantités d'oxyde de tungstène WO3, ajouté pour élargir la gamme de température de fonctionnement; avec de petites quantités de silice (SiO₂) pour stabiliser la structure et enfin, avec des petites quantités d'oxyde de Molybdène (MoO₃) afin de rendre le catalyseur plus résistant à la contamination des constituants du rejet gazeux. Ce type de catalyseur requiert des températures de fonctionnement se situant entre 300 et 450°C.
- les zéolithes cristallines, de porosité élevée, naturelles ou aluminosilicates synthétiques sont utilisées à des températures de fonctionnement se situant entre 350 et 600°C.
- les oxydes de fer composés de particules d'oxyde de fer avec une fine pellicule cristalline de phosphate de fer.
- le charbon actif qui se compose de charbon pulvérisé ou de charbon brut, mélangé avec des éléments inertes et élaborés sous formes de pastilles frittées. En raison de l'instabilité thermique du charbon actif à des températures élevées, des faibles températures de fonctionnement entre 100 et 220°C sont requises.

Un cycle thermodynamique dit de Rankine repose sur des transformations successives comprenant le pompage d'un liquide, la création de vapeur et sa surchauffe éventuelle, la détente de la vapeur et la condensation de celle-ci. Plusieurs applications du cycle de Rankine de base existent suivant la nature du fluide de travail utilisé.

Une machine thermique fonctionnant selon un cycle de Rankine est constituée de quatre éléments principaux reliés entre eux dans un circuit fermé, à savoir :
- une pompe permettant la mise en circulation du fluide et la remontée de sa pression;
- un échangeur de chaleur, dit échangeur chaud, dont la fonction est de prélever la source de chaleur disponible à valoriser;
- un organe de détente transformant la variation d'enthalpie du fluide en travail mécanique (puis électrique en présence d'une génératrice);
- un échangeur de chaleur, dit échangeur froid permettant la condensation de la vapeur restante après détente.

Dans certaines machines thermiques fonctionnant selon un cycle de Rankine, un échangeur de chaleur supplémentaire, appelé économiseur, peut être ajouté : il permet d'utiliser une partie de l'énergie restante dans le fluide après l'organe de détente, pour préchauffer le liquide en sortie de pompe.

En récupération sur des fumées encrassantes en tant que source chaude du cycle de Rankine, il est connu d'installer pour des questions de sécurité, d'installation et de maintenance, un circuit intermédiaire avec encore un échangeur supplémentaire entre fumées/fluide, un évaporateur fluide/évaporateur de la machine de Rankine et une pompe pour ce circuit intermédiaire.

Il existe un besoin pour améliorer les systèmes de récupération d'énergie de chaleur de gaz chaud(s) et/ou de fumée(s), en particulier celles encrassantes, notamment en vue d'augmenter les rendements d'échange thermique par rapport aux récupérateurs thermoélectriques selon l'état de l'art, aux machines thermiques aptes à fonctionner selon un cycle de Rankine et aux pompes à chaleur fonctionnant à hautes températures.

Le but général de l'invention est de répondre en partie à ce besoin.

### Exposé de l'invention

Pour ce faire, l'invention a tout d'abord pour objet, selon une première alternative, un système de récupération de l'énergie de la chaleur de fumée(s) et/ou de gaz chaud(s) comportant les caractéristiques de la revendication 1, et en particulier :
- un conduit de circulation en lit fluidisé de fumée(s) et/ou de gaz chaud,
- au moins un thermosiphon diphasique ou au moins un caloduc assisté par la gravité, dont la zone de chauffage, dite évaporateur, est agencée à l'intérieur du conduit tandis que la zone de refroidissement, dite condenseur, est agencée à l'extérieur du conduit,
- une machine thermique apte à fonctionner selon un cycle thermodynamique dit de Rankine, la machine thermique comportant un générateur de vapeur intégrant le(s) condenseur(s) du(des) thermosiphon(s) diphasique(s) ou du (des) caloduc(s) assisté(s) par la gravité.

L'invention a également pour objet, selon une deuxième alternative, un système de récupération de l'énergie de la chaleur de fumée(s) et/ou de gaz chaud(s) comportant les caractéristiques de la revendication 2, et en particulier :
- un conduit de circulation en lit fluidisé de fumée(s) et/ou de gaz chaud,
- au moins un thermosiphon diphasique ou au moins un caloduc assisté par la gravité dont la zone de chauffage, dite évaporateur, est agencée à l'intérieur du conduit tandis que la zone de refroidissement, dite condenseur, est agencée à l'extérieur du conduit,
- une pompe à chaleur, de préférence fonctionnant typiquement dans une gamme de 50 à 100°C, comportant un générateur de vapeur intégrant le(s) condenseur(s) du(des) thermosiphon(s) diphasique(s) ou du (des) caloduc(s) assisté(s) par la gravité.

L'invention a également pour objet, selon une troisième alternative, un système de récupération de l'énergie de la chaleur de fumée(s) et/ou de gaz chaud(s) comportant les caractéristiques de la revendication 3, et en particulier :
- un conduit de circulation en lit fluidisé de fumée(s) et/ou de gaz chaud,
- au moins un thermosiphon diphasique ou au moins un caloduc assisté par la gravité, dont la zone de chauffage, dite évaporateur, est agencée à l'intérieur du conduit tandis que la zone de refroidissement, dite condenseur, est agencée à l'extérieur du conduit,
- au moins un module thermoélectrique, comportant deux faces principales, dont une, dite face froide, et l'autre, dite face chaude, la face chaude étant couplée thermiquement avec le(s) condenseur(s) du (des) thermosiphon(s) diphasique(s) ou du (des) caloduc(s) asssisté(s) par la gravité.

Autrement dit, selon l'invention, on définit un nouveau système de récupération d'énergie de la chaleur de gaz chaud(s) et/ou de fumée(s) qui met en oeuvre les étapes suivantes :
- échange de chaleur entre gaz chaud(s) et/ou fumée(s) et l'évaporateur d'au moins un thermosiphon diphasique ou d'au moins un caloduc assisté par la gravité, immergé dans un lit fluidisé. La surface d'échange sur les thermosiphons peut être développée grâce à des ailettes;
- transfert de chaleur vers l'extérieur du lit fluidisé par le biais du (des) thermosiphon(s) diphasique(s) ou du (des) caloduc(s) assisté(s) par la gravité;
- transfert de chaleur entre le condenseur des thermosiphons diphasiques ou du(des) caloduc(s) assisté(s) par la gravité, et un système de transformation de l'énergie.

Les avantages communs aux trois alternatives selon l'invention et ceux propres à chacune sont nombreux et peuvent être énumérés comme suit.

Tout d'abord, par rapport à un échangeur de chaleur en lit fluidisé direct selon l'état de l'art, la solution selon l'invention permet de minimiser la surface d'échange au niveau de l'évaporateur des thermosiphons, car ceux-ci peuvent concentrer le flux sur une petite surface chaude du système de transformation d'énergie.

Pour les première et deuxième alternatives (machine thermique à cycle de Rankine et pompe à chaleur haute température), cela permet ainsi de minimiser le volume de fluide réfrigérant (éventuellement un fluide nocif pour l'effet de serre et la couche d'ozone) et permet d'obtenir une double étanchéité entre une machine thermique à fonctionnement en cycle Rankine ou en pompe à chaleur et le lit fluidisé. Le percement d'un tube dans le lit du à l'érosion est donc évité, la corrosion n'entraine pas le risque d'avoir des particules dans l'un des éléments de la machine thermodynamique pouvant entrainer la détérioration d' éléments de machines (compresseur, turbine...). On peut utiliser une pluralité de thermosiphons diphasiques indépendants ou de caloducs assistés par la gravité, dans le lit fluidisé, ce qui permet également de continuer à fonctionner en mode dégradé en cas de défaillance d'un thermosiphon ou d'un caloduc assisté par la gravité.

De plus, la mise en oeuvre d'un thermosiphon diphasique ou d'un caloduc assisté par la gravité, permet de garantir une température constante et homogène des parois en contact avec le fluide frigorigène, ce qui permet de minimiser les problèmes de dégradation dus à une surchauffe locale, et en cas de percement d'un tube les risques d'incendie avec les fluides frigorigènes éventuellement inflammables et explosifs.

Par rapport à une machine à cycle de Rankine selon l'état de l'art qui met en oeuvre un circuit fluide intermédiaire, la solution selon l'invention permet de supprimer la pompe du circuit fluide intermédiaire et donc les problèmes de maintenance inhérents à cette pompe.

En ce qui concerne un système selon la troisième alternative, i.e. avec modules thermoélectriques, l'échange thermique entre gaz chaud(s) et/ou fumée(s) et le(s) thermosiphon(s) diphasique(s) ou le(s) caloduc(s) assisté(s) par la gravité est très bon, ce qui couplé à un développement de surface par ailettage permet d'obtenir une résistance thermique chaude Rc particulièrement faible.

Comparativement aux récupérateurs thermoélectriques selon l'état de l'art dont le flux thermique est plutôt dans la gamme de quelques W/cm² au maximum, on peut grâce à l'invention passer ainsi un flux thermique par module thermoélectrique plus important, de l'ordre de quelques dizaines de W/cm².

Autrement dit, le rapport entre la puissance électrique générée par les modules thermoélectriques selon l'invention et celle générée par les récupérateurs thermoélectriques selon l'état de l'art est du même ordre, i.e. un facteur de quelques dizaines. Cela permet d'envisager une réduction du nombre des modules thermoélectriques et donc leur coût.

L'immersion d'un thermosiphon diphasique ou d'un caloduc assisté par la gravité, à ailettes, dans un lit fluidisé a donc pour conséquence d'augmenter le flux thermique total et d'amener ce flux au niveau du condenseur du thermosiphon ou du caloduc assisté par la gravité sur une surface de modules thermoélectriques plus faible, typiquement réduite d'un facteur 10 à 20.

Un autre avantage particulier, par rapport aux échangeurs de chaleur selon l'état de l'art de type à plaques et ailettes, est de séparer physiquement, grâce au(x) thermosiphon(s) ou au(x) caloduc(s) assisté(s) par la gravité, la zone des gaz chaud(s)/fumée(s) avec la zone de contact entre modules thermoélectriques et plaques froides de refroidissement. Ainsi, les modules thermoélectriques selon l'invention peuvent être confinés sous un capotage distinct du conduit/enceinte de lit fluidisé et, éventuellement sous gaz inerte. Il est donc plus aisé de gérer la pollution par les suies et les problèmes électriques afférents sur les modules thermoélectriques et la connectique électrique.

Un autre avantage d'un système avec modules thermoélectriques selon l'invention est de permettre par sa conception mécanique et par sa modularité d'améliorer les problèmes d'assemblage des empilements et de dilatation thermomécaniques entre les différents composants que l'on retrouve dans les récupérateurs thermoélectriques selon l'état de l'art à configuration surfacique avec empilements de sous-ensemble comportant chacun une pluralité de modules thermoélectriques.

Grâce à l'invention, la conception des circulations de gaz et les transformations pour les entrées/sorties de gaz est également simplifiée, puisqu'il est nécessaire d'avoir un seul conduit pour les gaz chauds/fumées.

Un autre avantage d'un système avec modules thermoélectriques selon l'invention est de permettre par sa conception mécanique et par sa modularité éventuellement démontable un accès facile à chaque thermosiphon ou caloduc assisté par la gravité, pour maintenance/remplacement d'un thermosiphon ou d'un caloduc défaillant, de modules thermoélectriques, des plaques de refroidissement, de la connectique hydraulique et thermique.

Un autre avantage particulier vient du fait que le lit fluidisé étant sensiblement isotherme dans toutes ses dimensions (longueur, largeur et hauteur), on peut obtenir une température identique sur tous les modules thermoélectriques. Ceci permet de brancher les modules thermoélectriques en série ou en parallèle sans pertes de rendement et électriques, car tous les modules fonctionnent sous le même écart de température et délivrent une même tension. Il est ainsi possible de simplifier la conception des convertisseurs de tension convertissant la tension des modules thermoélectriques en une tension régulée utilisable.

Différentes variantes de réalisation avantageuses peuvent être envisagées.

Ainsi, en fonction du niveau de température de fonctionnement, les thermosiphons peuvent être réalisés avantageusement en acier inoxydable ou en acier au carbone éventuellement émaillés, ou en alliages ferreux à base nickel. On peut également envisager des thermosiphons sous la forme de bi tubes cuivre/acier afin de simplifier un traitement interne anti-corrosion des thermosiphons, dans le cas où celui-ci nécessaire.

Le fluide utilisé à l'intérieur de l'enveloppe d'un thermosiphon ou d'un caloduc assisté par la gravité, est préférentiellement de l'eau, mais également d'autres fluides compatibles avec l'enveloppe du thermosiphon peuvent être envisagés comme le toluène, le naphtalène, le diphényle, l'oxyde de diphényle ou tout autre fluide connu de l'homme de l'art suivant les gammes de température de fonctionnement des thermosiphons ou des caloducs assistés par la gravité. Dans le choix du fluide, l'homme de l'art prendra en compte également les capacités de transfert thermique limite des thermosiphons, la compatibilité entre fluide et enveloppe et les contraintes d'inflammabilité et de toxicité dépendante de l'application.

L'évaporateur des thermosiphons peut être avantageusement sous la forme d'un tube de section circulaire ou ovoïde, préférentiellement orienté avec sa grande largeur dans le sens vertical, afin d'optimiser le rapport d'échange thermique entre gaz chaud(s)/fumée(s) chaude(s) en lit fluidisé et l'évaporateur.

Les tubes d'évaporateur des thermosiphons peuvent être avantageusement munis d'ailettes à section circulaire, rectangulaire, segmentée, sous la forme de tétons pour développer la surface d'échange avec le lit fluidisé.

L'espacement entre ailettes est de préférence au minimum égal à dix fois la taille moyenne des particules afin de ne pas gêner leur fluidisation.

Lorsque plusieurs thermosiphons diphasiques ou caloducs assistés par la gravité sont agencés au sein d'un même conduit de circulation de gaz chauds/fumées chaudes, le pas d'espacement entre les tubes d'évaporateur est de préférence calculé afin d'obtenir une vitesse de fluidisation adéquate dans la section de passage minimum du lit.

Le lit fluidisé est de préférence constitué de particules de sable, avantageusement de taille moyenne de l'ordre de 400 µm.

De préférence, le lit de particules est de préférence maintenu au repos, c'est-à-dire sans circulation de gaz/fumées par une grille de fluidisation agencée en partie inférieure du lit.

La section totale des passages de gaz dans le lit est avantageusement calculée pour que la vitesse des gaz soit au régime de fonctionnement nominal comprise entre la vitesse minimum de fluidisation et la vitesse terminale d'entrainement des particules par le gaz.

La hauteur du lit fluidisé est avantageusement calculée de manière à ce que tous les évaporateurs des thermosiphons diphasiques ou des caloducs assistés par la gravité soient complètement immergés dans le lit en fonctionnement, c'est-à-dire avec circulation de gaz/fumées. Autrement dit, le niveau libre du lit fluidisé est au-dessus des thermosiphons agencés le plus haut.

En aval du lit fluidisé, on peut agencer avantageusement dans le circuit des gaz/fumées, un dispositif de filtration afin d'éliminer les poussières provenant des particules de carbone issues des fumées, ainsi que des particules fines issues du lit fluidisé.

Selon une variante avantageuse de la troisième alternative, le(s) module(s) thermoélectrique(s) étant de forme générale plane, la face chaude d'un module étant couplée thermiquement avec le(s) condenseur(s) du (des) thermosiphon(s) diphasique(s) ou du (des) caloduc(s) assisté(s) par la gravité, par une pièce d'adaptation à la forme de l'enveloppe du(des) thermosiphon(s) diphasique(s), tandis que sa face froide est couplée thermiquement directement à une plaque, dite plaque froide.

Le système peut comporter au moins deux modules thermoélectriques de forme plane agencés de part et d'autre d'un même condenseur de thermosiphon(s) diphasique(s) ou de caloduc(s) assisté(s) par la gravité, les faces chaudes des deux modules étant couplées thermiquement avec le condenseur par une seule pièce d'adaptation à la forme de l'enveloppe du condenseur, tandis que la face froide de l'un des deux modules est couplée thermiquement directement à une première plaque froide et la face froide de l'autre des deux modules est couplée thermiquement directement à une deuxième plaque froide, les première et deuxième plaques froides étant agencées de part et d'autre du condenseur.

Selon une autre variante avantageuse de la troisième alternative, le(s) module(s) thermoélectrique(s) étant de forme générale cylindrique ou ovoïde, la face chaude d'un module étant couplée thermiquement directement avec le(s) condenseur(s) du (des) thermosiphon(s) diphasique(s) ou du (des) caloduc(s) assisté(s) par la gravité, dont l'enveloppe est de section cylindrique ou ovoïde, tandis que sa face froide est couplée thermiquement directement à une pièce à section cylindrique ou à section ovoïde, dite pièce froide.

Le système peut comporter avantageusement une pluralité de thermosiphons diphasiques ou de caloducs assistés par la gravité, alignés selon au moins une rangée, avec leurs évaporateurs et leurs zones adiabatiques allongées selon une direction transversale à la section du conduit.

On peut prévoir comportant un condenseur commun à la pluralité des thermosiphons diphasiques ou des caloducs assistés par la gravité.

La forme de l'enveloppe du condenseur commun peut alors être soit de forme générale parallélépipédique, soit de forme générale cylindrique.

Selon un mode de réalisation de l'invention, le(s) thermosiphon(s) diphasique(s) ou le (les) caloduc(s) assisté(s) par la gravité est(sont) de forme allongée droite, le (les) condenseur(s) étant agencé(s) au-dessus du (des) évaporateur(s).

Selon un autre mode de réalisation de l'invention, le(s) thermosiphon(s) diphasique(s) ou le (les) caloduc(s) assisté(s) par la gravité peu(ven)t être de forme allongée droite dans leur partie évaporateur et coudée dans leur partie condenseur, l'(les) évaporateur(s) étant agencé(s) à l'horizontal et le(s) condenseur(s) étant incliné(s) vers le haut.

Les systèmes de récupération en lit fluidisé selon l'invention peuvent en outre mettre en oeuvre un lit réactif de manière à combiner la récupération de chaleur dans le lit avec une dépollution des gaz/fumées chaud(e)s.

On peut ainsi notamment éliminer les NOx (NO, NO₂ et N₂O) et le CO grâce à des catalyseurs adaptés connus de l'homme de l'art pour assurer cette fonction de dépollution supplémentaire introduite dans le lit fluidisé. Il peut s'agir des catalyseurs pour les réactions chimiques de dépollution, cités en préambule. Ainsi, l'invention concerne également une installation comportant un système qui vient d'être décrit et un dispositif de dépollution du (des) gaz chaud(s) et/ou fumée(s) à base de catalyseurs intégrés dans le lit fluidisé, de préférence adaptés à l'élimination de NOx (NO, NO2 et N2O) et du CO.

L'invention concerne enfin l'application du système décrit ou de l'installation visée ci-dessus, pour la récupération d'énergie de la chaleur fumées industrielles encrassantes ou issues de moteur diesel.

### Description détaillée

D'autres avantages et caractéristiques de l'invention ressortiront mieux à la lecture de la description détaillée de l'invention faite à titre illustratif et non limitatif en référence aux figures suivantes parmi lesquelles :
- la figure 1 est une vue schématique en coupe longitudinale d'un caloduc;
- la figure 2 est une vue schématique en coupe longitudinale d'un thermosiphon diphasique conforme à l'invention;
- la figure 3 est une vue schématique d'un système de récupération de l'énergie de la chaleur de gaz chauds/fumées selon une alternative de l'invention mettant en oeuvre une machine thermique à cycle de Rankine;
- la figure 4 est une vue schématique d'un système de récupération de l'énergie de la chaleur de gaz chauds/fumées selon une alternative de l'invention mettant en oeuvre une pompe à chaleur haute température;
- la figure 5 est une vue en perspective d'une partie d'un système de récupération de l'énergie de la chaleur de gaz chauds/fumées applicable soit à une machine à cycle de Rankine soit à une pompe à chaleur haute température;
- la figure 5A est une vue en coupe longitudinale d'une variante d'un module de générateur de vapeur applicable soit à une machine à cycle de Rankine soit à une pompe à chaleur haute température, et adapté pour être couplé à des condenseurs de thermosiphon diphasique conforme à l'invention;
- la figure 6 est une vue en perspective et en coupe longitudinale d'un système de récupération de l'énergie de la chaleur de gaz chauds/fumées selon une autre alternative de l'invention mettant en oeuvre des modules thermoélectriques; ;
- la figure 6A est une vue schématique de côté du système selon la figure 6 ;
- la figure 6B est une vue de détail et en éclaté d'une partie du système selon la figure 6 ;
- les figures 7A et 7B sont des vues de côté de variantes d'agencement d'un thermosiphon diphasique dans et en dehors d'un conduit de gaz chauds/fumées selon l'invention ;
- les figures 8A à 8C et 9 sont des reproductions photographiques de variantes de réalisation d'ailettes sur un thermosiphon diphasique selon l'invention ;
- les figures 10A à 11D sont des vues de détail en perspective de variantes de d'agencement de modules thermoélectriques sur une pluralité de thermosiphons diphasiques selon l'invention ;
- les figures 12A et 12B sont des vues en perspective de variantes d'agencement d'un condenseur commun à une pluralité de thermosiphons diphasiques selon l'invention ;
- les figures 13A à 14B sont des vues en perspective de variantes de d'agencement d'enceinte et des entrées/sorties de gaz chaud/fumées d'un système de récupération de l'énergie de leur chaleur selon l'invention ;
- la figure 15 est une vue en perspective d'une variante d'une enceinte annulaire et d'une répartition radiale d'une une pluralité de thermosiphons diphasiques selon l'invention.

Dans l'ensemble de la présente demande, les termes « vertical », « inférieur », « supérieur », « bas », « haut », « dessous » et « dessus » sont à comprendre par référence par rapport à un thermosiphon diphasique selon l'invention tel qu'en configuration de fonctionnement, son condenseur est à un niveau au-dessus de son évaporateur afin d'assurer le retour des condensats par gravité.

De même, dans l'ensemble de la présente demande, les termes «entrée», «sortie», «aval» et «amont» sont à comprendre en référence au sens de circulation d'un fluide dans un système selon l'invention.

On précise que par souci de clarté les mêmes parties d'un thermosiphon diphasique selon l'état de l'art et selon l'invention sont désignées par les mêmes références.

De même, dans la description détaillée qui suit les termes « thermosiphon diphasique » peuvent signifier indifféremment un thermosiphon diphasique sans structure capillaire ou un caloduc assisté par la gravité comprenant une structure capillaire.

Les figures 1 et 2 ont déjà été commentées en détail en préambule. Elles ne sont donc pas commentées ci-après.

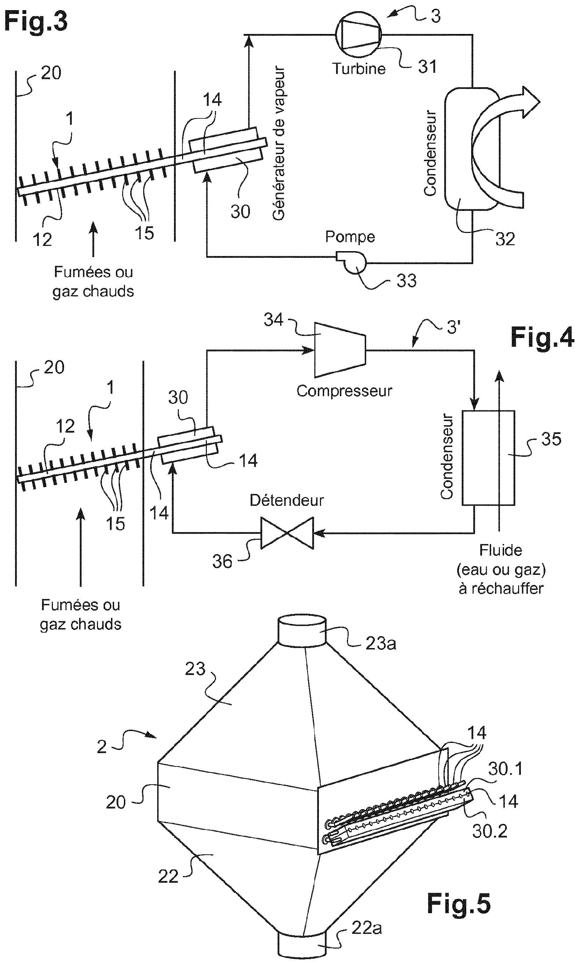

On a représenté en figure 3, un exemple d'un système à récupération d'énergie de la chaleur de gaz chaud(s) et/ou fumée(s) selon une alternative de l'invention mettant en oeuvre une machine thermique apte à fonctionner en cycle de Rankine.

Un tel système comporte un conduit 20 de circulation en lit fluidisé de fumée(s) et/ou de gaz chaud et un thermosiphon diphasique 1. Dans l'exemple illustré, le thermosiphon 1 est de forme allongée droite et est incliné par rapport à l'horizontal avec le condenseur 14 à un niveau au-dessus de l'évaporateur 12 afin d'assurer le retour des condensats par gravité. Dans l'exemple illustré également, le thermosiphon 1 présente une enveloppe tubulaire 10 pourvue d'ailettes 15 le long de son évaporateur 12.

Au moins l'évaporateur 12 du thermosiphon diphasique 1, est agencé à l'intérieur du conduit 20 tandis que le condenseur 14 est agencé à l'extérieur du conduit 20.

A l'extérieur du conduit 20, le condenseur 14 du thermosiphon diphasique est intégré à un générateur de vapeur 30 d'une machine thermique 3 apte à fonctionner selon un cycle thermodynamique de Rankine. Autrement dit, le condenseur 14 transfère la chaleur pour que le générateur de vapeur 30 puisse générer de la vapeur.

La machine thermique comporte par ailleurs en aval une turbine 31 qui transforme l'énergie de la vapeur créée par le générateur 30 en énergie mécanique. La vapeur issue de la turbine 31 est alors condensée en aval par le condenseur 32 puis la vapeur condensée subit une augmentation de pression et est refoulée vers le générateur de vapeur 30.

On a représenté en figure 4, un exemple d'un système à récupération d'énergie de la chaleur de gaz chaud(s) et/ou fumée(s) selon une autre alternative de l'invention mettant en oeuvre une pompe à chaleur haute température.

Tout comme pour l'exemple de la figure 3, un tel système comporte un conduit 20 de circulation en lit fluidisé de fumée(s) et/ou de gaz chaud et un thermosiphon diphasique 1. Dans l'exemple illustré, le thermosiphon 1 est de forme allongée droite et est incliné par rapport à l'horizontal avec le condenseur 14 à un niveau au-dessus de l'évaporateur 12 afin d'assurer le retour des condensats par gravité. Dans l'exemple illustré également, le thermosiphon 1 présente une enveloppe tubulaire 10 pourvue d'ailettes 15 le long de son évaporateur 12.

Au moins l'évaporateur 12 du thermosiphon diphasique 1 est agencé à l'intérieur du conduit 20 tandis que le condenseur 14 est agencé à l'extérieur du conduit 20.

A l'extérieur du conduit 20, le condenseur 14 du thermosiphon diphasique est intégré à un générateur de vapeur 30 d'une pompe à chaleur haute température 3'. Autrement dit, le condenseur 14 transfère la chaleur pour que le générateur de vapeur 30 puisse générer de la vapeur.

La pompe à chaleur haute température 3' comporte par ailleurs en aval un compresseur 34 qui comprime la vapeur créée par le générateur 30 afin de la réchauffer. La vapeur réchauffée, issue du compresseur 34, est alors condensée en aval par le condenseur 35 qui sert à réchauffer un autre fluide (liquide ou gaz). La vapeur condensée est détendue par le détendeur 36 et envoyée vers le générateur de vapeur 30.

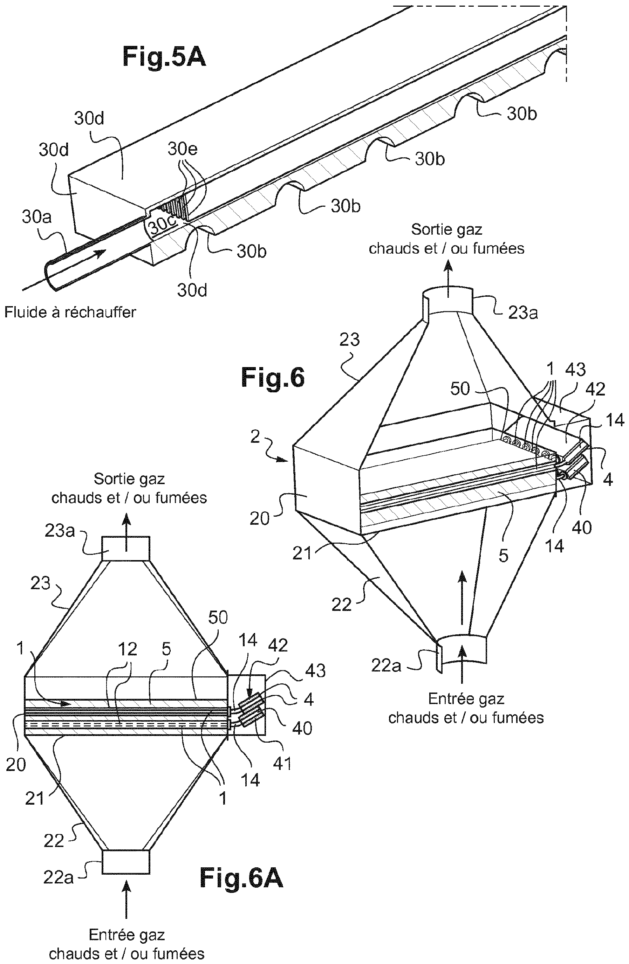

On a représenté en figure 5, un exemple de réalisation d'une partie d'un système à récupération d'énergie de la chaleur de gaz chaud(s) et/ou fumée(s) qui s'applique aussi bien à l'alternative avec une machine à cycle de Rankine qu'à une pompe à chaleur haute température.

Dans cet exemple de la figure 5, les évaporateurs 12 de la pluralité de thermosiphons diphasiques 1 sont agencés à l'intérieur du conduit 20 tandis que les condenseurs 14 sont agencés à l'extérieur du conduit 20. Les condenseurs 14 des thermosiphons 1 sont lisses à l'extérieur et coudés vers le haut afin de positionner les condenseurs 14 au-dessus des évaporateurs 12 agencés eux à l'horizontal, et assurer ainsi le retour des condensats par gravité.

A titre d'exemple, les thermosiphons 1 sont en acier inoxydable dont l'enveloppe a un diamètre intérieur de 14 mm et un diamètre extérieur de 16 mm avec des ailettes 15 circulaires de diamètre extérieur égal à 34 mm, d'épaisseur 1 mm, répartis uniformément le long des évaporateurs avec un pas d'espacement entre ailettes de 5 mm. A titre d'exemple également, un évaporateur 12 a une longueur de 864 mm.

Dans l'exemple illustré de la figure 5, les thermosiphons 1 sont alignés selon deux rangées superposées l'une sur l'autre, avec les thermosiphons de la rangée du dessus en quinconce par rapport à celle du dessous. A titre d'exemple, chaque rangée comporte un nombre de dix-huit thermosiphons. Le pas d'espacement horizontal entre tubes des thermosiphons 1 est de 48 mm, et le pas d'espacement vertical entre tubes est de 50 mm.

Un traitement à base d'un inhibiteur de corrosion, ou par pré-oxydation à la vapeur d'eau surchauffée à 400°C permet d'assurer un bon fonctionnement des thermosiphons diphasiques 1 à long terme, en minimisant la quantité d'incondensables produits au cours du temps.

Dans cet exemple de la figure 5, le conduit 20 est intégré à une enceinte 2 de réalisation et de confinement d'un lit fluidisé 5. La hauteur du lit fluidisé est calculée de manière à ce que toutes les rangées de tubes 14 des thermosiphons 1 soient complètement immergées dans le lit fluidisé en fonctionnement, c'est-à-dire lors de la circulation des gaz chauds/fumées. Ainsi, le niveau libre du lit fluidisé 5 est toujours au-dessus de la rangée supérieure de tubes 14. A titre d'exemple, la hauteur du lit 5 est de 180 mm.

L'enceinte 2 comporte dans sa partie inférieure, en dessous du conduit 20, une portion 22 divergente avec une entrée 22a pour l'arrivée des gaz chauds et/ou fumées chaudes dans le conduit 20, et dans sa partie supérieure une portion 23 convergente avec une sortie 23a pour la sortie des fumées refroidies.

A la jonction entre la portion d'entrée 22 et le conduit 20, est agencée une grille de fluidisation sous la forme d'une tôle perforée 21, dont la fonction est de contenir le lit fluidisé au repos et d'assurer sa fluidisation lors du passage des gaz/fumées.

A titre d'exemple, l'enceinte 2 est en acier, le conduit 20 a une section de 864*864 mm, et une hauteur de 250 mm.

Dans cet exemple de la figure 5, les condenseurs 14 sont chacun en interface thermique, c'est-à-dire couplés thermiquement, avec un générateur de vapeur 30 en deux modules identiques 30.1, 30.2 de part et d'autre des condenseurs 14. Ce générateur 30 sert à réchauffer le fluide fonctionnel soit d'une machine 3 à cycle de Rankine soit d'une pompe à chaleur haute température 3'.

Une variante avantageuse de réalisation d'un module 30.1 du générateur de vapeur 30 adapté pour être couplé thermiquement avec les condenseurs 14 est montrée en figure 5A.

Le module 30.1 comporte dans sa partie supérieure, une entrée 30a du fluide à réchauffer qui est le fluide fonctionnel soit de la machine à cycle de Rankine, soit de la pompe à chaleur haute température, et dans sa partie inférieure des logements 30b chacun de forme complémentaire avec un condenseur 14 d'un thermosiphon 1.

L'entrée 30a débouche sur une chambre 30c délimitée par des parois 30d et dans laquelle sont agencées des plaquettes d'échange thermique 30 e.

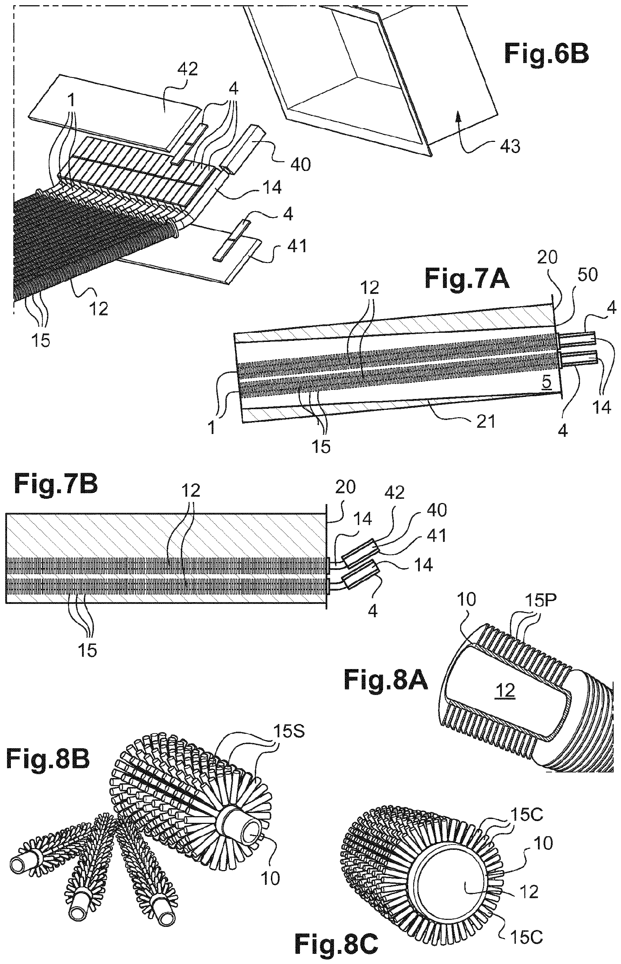

On a représenté en figures 6 à 6B, un exemple d'un système à récupération d'énergie de la chaleur de gaz chaud(s) et/ou fumée(s) selon une autre alternative de l'invention mettant en oeuvre des modules thermoélectriques.

Le système selon cette autre alternative comporte également un conduit 20 de circulation en lit fluidisé de fumée(s) et/ou de gaz chaud et un thermosiphon diphasique 1, de forme coudée vers le haut.

Tel qu'illustré en figures 6, 6A et 6B, les évaporateurs 12 de la pluralité de thermosiphons diphasiques 1 sont agencés à l'intérieur du conduit 20 tandis que les condenseurs 14 sont agencés à l'extérieur du conduit 20.

Les thermosiphons 1 ont une enveloppe sous forme d'un tube à ailettes 15.

Dans l'exemple illustré aux figures 6 à 6B, les condenseurs 14 des thermosiphons 1 sont lisses à l'extérieur et coudés vers le haut afin de positionner les condenseurs 14 au-dessus des évaporateurs 12 agencés eux à l'horizontal, et assurer ainsi le retour des condensats par gravité. A titre d'exemple, les thermosiphons 1 sont en acier inoxydable dont l'enveloppe a un diamètre intérieur de 14 mm et un diamètre extérieur de 16 mm avec des ailettes 15 circulaires de diamètre extérieur égal à 34 mm, d'épaisseur 1 mm, répartis uniformément le long des évaporateurs avec un pas d'espacement entre ailettes de 5 mm. A titre d'exemple également, l'évaporateur 12 a une longueur de 864 mm.

Dans l'exemple illustré, les thermosiphons 1 sont alignés selon deux rangées superposées l'une sur l'autre, avec les thermosiphons de la rangée du dessus en quinconce par rapport à celle du dessous. A titre d'exemple, chaque rangée comporte un nombre de dix-huit thermosiphons. Le pas d'espacement horizontal entre tubes des thermosiphons 1 est de 48 mm, et le pas d'espacement vertical entre tubes est de 50 mm.

Un traitement à base d'un inhibiteur de corrosion, ou par pré-oxydation à la vapeur d'eau surchauffée à 400°C permet d'assurer un bon fonctionnement des thermosiphons diphasiques 1 à long terme, en minimisant la quantité d'incondensables produits au cours du temps.

Dans l'exemple de l'alternative illustrée aux figures 6 à 6B, les condenseurs 14 sont en interface thermique, c'est-à-dire couplés thermiquement, avec des modules thermoélectriques 4. Ainsi, dans cette alternative, la fonction des thermosiphons 1 est de transférer de la chaleur des fumées (via le lit fluidisé) vers la face chaude des modules thermoélectriques 4.

Plus précisément, la face chaude des modules 4 est couplée thermiquement avec les condenseurs 14 des thermosiphons diphasiques 1 par une pièce d'adaptation 40 de forme intérieure cylindrique complémentaire à celle d'un condenseur 14 et de forme extérieure plane.

Une pièce d'adaptation 40 permet ainsi de passer de la géométrie circulaire du condenseur 14 à une géométrie plane. A titre d'exemple, une pièce d'adaptation 40 peut être avantageusement réalisée en matériau conducteur thermique comme de l'aluminium ou du cuivre. Chaque pièce 40 peut être avantageusement constituée par deux demi-coquilles fixées autour de chaque condenseur 14 par des vis avec de la graisse thermique ou un matériau d'interface thermique (TIM) pour assurer un bon contact thermique.

Chacune des faces planes des pièces d'adaptation 40 est en interface thermique avec la face chaude des modules thermoélectriques planaires 4. Les modules thermoélectriques 4 ont pour rôle de générer une puissance électrique lorsqu'ils sont traversés par un flux thermique.

Chaque face froide des modules thermoélectriques 4 est en interface thermique avec une plaque froide 41,42 parcourue par de l'eau de refroidissement permettant de maintenir une basse température sur les faces froides. De préférence, les plaques froides sont en aluminium.

Les différentes interfaces thermiques peuvent être avantageusement réalisées à l'aide d'un matériau d'interface thermique de type graisse ou colle thermique chargée de particules métalliques et/ou céramiques, polymères chargés fusibles ou non, feuillards métalliques, brasures à basse température du type à base d'étain, plomb, argent, indium ....

Le matériau thermoélectrique utilisé pour les modules 4 est de préférence le Tellurure de Bismuth Bi₂Te₃. Il est également envisageable d'utiliser d'autre matériaux tels que des alliages silicium-germanium (SiGe), les Siliciures, les skutterudites, ...et tous autres matériaux thermoélectriques connus par l'homme de l'art

Dans l'exemple illustré aux figures 6 à 6B, deux groupes de modules thermoélectriques 4 de forme plane sont agencés de part et d'autre d'un même condenseur 14 de thermosiphon diphasique 1.

Les faces chaudes des deux modules 4 sont couplées thermiquement avec le condenseur 14 du thermosiphon 1 par une seule pièce d'adaptation 40, tandis que la face froide de l'un des deux modules 4 est couplée thermiquement directement à une première plaque froide 41 et la face froide de l'autre des deux modules 4 est couplée thermiquement directement à une deuxième plaque froide 42. Les premières 41 et deuxièmes 42 plaques froides sont agencées de part et d'autre du condenseur 14.

Dans l'exemple illustré aux figures 6 à 6B, le conduit 20 est intégré à une enceinte 2 de réalisation et de confinement d'un lit fluidisé 5. La hauteur du lit fluidisé est calculée de manière à ce que toutes les rangées de tubes 14 des thermosiphons 1 soient complètement immergées dans le lit fluidisé en fonctionnement, c'est-à-dire lors de la circulation des gaz chauds/fumées. Ainsi, comme illustré, le niveau libre 50 du lit fluidisé 5 est toujours au-dessus de la rangée supérieure de tubes 14. A titre d'exemple, la hauteur du lit 5 est de 180 mm.

L'enceinte 2 comporte dans sa partie inférieure, en dessous du conduit 20, une portion 22 divergente avec une entrée 22a pour l'arrivée des gaz chauds et/ou fumées chaudes dans le conduit 20, et dans sa partie supérieure une portion 23 convergente avec une sortie 23a pour la sortie des fumées refroidies.

A la jonction entre la portion d'entrée 22 et le conduit 20, est agencée une grille de fluidisation sous la forme d'une tôle perforée 21, dont la fonction est de contenir le lit fluidisé au repos et d'assurer sa fluidisation lors du passage des gaz/fumées.

A titre d'exemple, l'enceinte 2 est en acier, le conduit 20 a une section de 864*864 mm, et une hauteur de 250 mm.

L'ensemble des modules thermoélectriques 4 est avantageusement confiné dans une chambre étanche par rapport à l'intérieur du conduit 20, au moyen d'un capot 43 prévu à cet effet.

Le lit fluidisé 5 est de préférence constitué de particules de sable de taille moyenne de l'ordre de 400 µm.

A titre d'exemple, avec les données chiffrées ci-dessus, la vitesse des gaz dans le lit fluidisé est de l'ordre de 2,06 m/s, la vitesse des gaz dans la section totale est de 1,23 m/s, alors que la vitesse minimum de fluidisation est de 0,08 m/s, et la vitesse d'entrainement des particules est de 3,5 m/s.

On a comparé un exemple de système de récupération à modules thermoélectriques 4 qui vient d'être décrit à un exemple de récupérateur thermoélectrique selon l'état de l'art à configuration surfacique planaire de modules thermoélectriques à empilement, comme décrit dans la demande de brevet FR 2972570.

On précise que l'échangeur de chaleur considéré dans l'exemple comparatif selon l'état de l'art est de type à plaques et ailettes de refroidissement.

On précise également que par « générateur thermoélectrique » on entend dans les exemples, l'ensemble du système de génération thermoélectrique.

### Exemple 1 (comparatif):

Un programme de dimensionnement a été développé à l'aide d'un code de calcul qui peut être usuel, c'est-à-dire connu dans le dimensionnement thermique. L'optimisation est faite de manière à optimiser la puissance massique en matériau thermo électrique. Les données et les résultats de calcul principaux sont donnés dans le tableau 1 ci-dessous.

**TABLEAU 1**

| **Paramètre** | **Valeur** | **Unité** |
|---|---|---|
| **DONNEES** | | |
| Fluide chaud | Fumées | |
| Débit massique fumées | 0,57 | Kg/s |
| Température entrée fumées | 450 | °C |
| Température sortie fumées | 200 | °C |
| Fluide froid | Eau | |
| Débit massique gaz froid | 7,1 | Kg/s |
| Température entrée froid | 30 | °C |
| Température sortie froid | 35 | °C |
| Efficacité d'échange | 0,59 | |
| Puissance thermique échangée | 148600 | W |

| **MODULES THERMOELECTRIQUES** | | |
|---|---|---|
| Matériau | Bi₂Te₃ | |
| Taille des plots | 1*1 | mm |
| Hauteur des plots | 1 | mm |
| Taille d'un module | 20*20 | mm |
| Masse de matériau thermoélectrique | 1,66 | kg |
| Nombre de modules | 14250 | |
| Flux de chaleur sur un module | 2,6 | W/cm² |
| Rendement d'un module | 6,4 | % |
| Puissance électrique par module | 0,57 | W |
| Facteur de mérite moyen ZT | 0,94 | |
| température moyenne | 114 | °C |

| **ECHANGEUR CHAUD** | | |
|---|---|---|
| Matériau | Acier inoxydable | |
| Type de surface | droite | |
| Epaisseur d'ailette | 0,15 | mm |
| Hauteur d'ailette | 8 | mm |
| Espace entre ailettes | 2 | mm |

| **ECHANGEUR FROID** | | |
|---|---|---|
| Matériau | Alliage d'aluminium | |
| Type de surface | Mini canaux | |
| Largeur des canaux | 2 | mm |
| Hauteur canaux | 2 | mm |
| Espace entre canaux | 1 | mm |

| **GENERATEUR THERMOELECTRIQUE** | | |
|---|---|---|
| Taille du coeur | 0,47x0,47x0,3 | m*m*m |
| Nombre d'étages | 20 | |
| Puissance électrique brute | **8180** | W |
| Perte de pression des fumées | 433 | Pa |

### Exemple 2 selon l'invention :

Les mêmes conditions données que pour le calcul précédent ont été utilisées. On donne dans le tableau 2 ci-dessous, le dimensionnement réalisé pour un système avec circulation des fumées en lit fluidisé et avec thermosiphons diphasiques 1 comme décrit ci-dessus.

**TABLEAU 2**

| **Paramètre** | **Valeur** | **Unité** |
|---|---|---|
| **MODULES THERMOELECTRIQUES** | | |
| Matériau | Bi₂Te3 | |
| Taille des plots | lxl | mm |
| Hauteur des plots | 1 | mm |
| Taille module | 20x20 | mm |
| Masse de matériau thermoélectrique | 2,7 | Kg |
| Nombre de modules | 1455 | |
| Flux de chaleur sur le module | 25,5 | W/cm² |
| Rendement du module | 7,5 | % |
| Puissance électrique par module | 6,1 | W |
| Facteur de mérite moyen ZT | 0,93 | |
| Température moyenne | 132 | °C |

| **THERMOSIPHONS DIPHASIQUES** | | |
|---|---|---|
| Diamètre externe de l'enveloppe | 16 | mm |
| Diamètre interne de l'enveloppe | 14 | mm |
| Longueur de l'évaporateur | 864 | mm |
| Longueur du condenseur | 127 | mm |
| Nombre de rangées | 2 | |
| Nombre de tubes par rangées | 18 | |
| Pas horizontal | 48 | mm |
| Pas vertical | 50 | mm |
| Matériau | Acier inoxydable | |
| Type d'ailette | Circulaire soudée | |
| Epaisseur d'ailette | 1 | mm |
| Hauteur d'ailette | 10 | mm |
| Espace entre ailettes | 5 | mm |

| **ECHANGEUR FROID** | | |
|---|---|---|
| Matériau | Alliage d'aluminium | |
| Type de surface | mini canaux | |
| Largeur des canaux | 2 | mm |
| Hauteur canaux | 2 | mm |
| Espace entre canaux | 1 | mm |

| **LIT FLUIDISE** | | |
|---|---|---|
| Matériau des particules | Sable | |
| Taille des particules | 400 | µm |
| Hauteur du lit fluidisé | 180 | mm |
| Coefficient d'échange gaz/paroi | 690 | W/m² .C |

| **GENERATEUR THERMOELECTRIQUE** | | |
|---|---|---|
| Taille de l'enceinte 2 | 0,86x0,86x0,2 | m |
| Nombre de rangées de thermosiphons diphasiques | 20 | |
| Puissance électrique brute | 8700 | W |
| Perte de pression des fumées | 2020 | Pa |

Le tableau 3 ci-dessous fait la comparaison des différences de caractéristiques entre les exemples 1 et 2.

**TABLEAU 3**

| | **Exemple 1 comparatif** | **Exemple 2 selon l'invention** | **Gain** |
|---|---|---|---|
| Puissance électrique (W) | 7680 | 8700 | 1,13 |
| Flux thermique sur module TE (W/cm²) | 2,6 | 25,5 | 9,8 |
| Nombre de TE 20X20mm | 14250 | 1455 | 9,8 |
| Flux électrique sur plot TE (W/cm²) | 0,135 | 1,680 | 12,4 |

On précise que l'abbréviation TE désigne un seul module thermoélectrique.

De ce tableau 3 comparatif, il résulte que par rapport à l'exemple 1 selon l'état de l'art, le gain du nombre de modules thermoélectriques avec l'exemple selon l'invention est un facteur égal à 10, tout en obtenant une puissance électrique supérieure de 13%. Ramené au flux électrique par surface de module thermoélectrique, le gain est un facteur égal à 12,4.

On a réalisé la même comparaison avec des modules thermoélectriques de taille 50x50mm et des plots thermoélectriques de hauteur 500 µm.

Le tableau 4 ci-dessous fait la comparaison

**TABLEAU 4**

| | **Exemple 1 comparatif** | **Exemple 2 selon l'invention** | **Gain** |
|---|---|---|---|
| Puissance électrique (W) | 5126 | 7830 | 1,52 |
| Flux thermique sur module TE (W/cm²) | 3,7 | 43,1 | 11,6 |
| Nombre de TE 50X50mm | 1626 | 138 | 11,8 |
| Flux électrique sur plot TE (W/cm²) | 0,126 | 2,18 | 17.3 |

De ce tableau 4 comparatif, il ressort que les gains sont encore plus importants avec ces dimensions supérieures de modules électriques.

Différentes variantes de réalisation avantageuses peuvent être envisagées.

En ce qui concerne la réalisation des thermosiphons et leur agencement par rapport au conduit 20 de circulation des gaz/fumées, on peut envisager des thermosiphons droits 1, qui ont l'avantage d'être simples à réaliser, avec une inclinaison prévue pour avoir le condenseur 14 au-dessus de l'évaporateur 12 (figure 7A).

On peut aussi prévoir des thermosiphons 1 avec leur partie évaporateur 12 droite et leur partie condenseur 14 coudée. Ainsi l'agencement est tel que l'évaporateur 12 est à l'horizontal dans le conduit 20 tandis que le condenseur 14 coudé est orienté vers le haut (figure 7B). Cette variante permet de minimiser la hauteur du lit fluidisé 5, et donc la perte de charge dans le circuit de gaz/fumées.

Les tubes d'évaporateur 12 sont avantageusement munis d'ailettes 15. Il peut s'agir d'ailettes pleines à section circulaire 15P (figure 8A), d'ailettes segmentées 15S (figure 8B) ou d'ailettes sous la forme de tétons 15C (figure 8C). Les ailettes à tétons 15C et les ailettes segmentées ont l'avantage d'avoir un coefficient d'échange supérieur à celui des ailettes pleines.

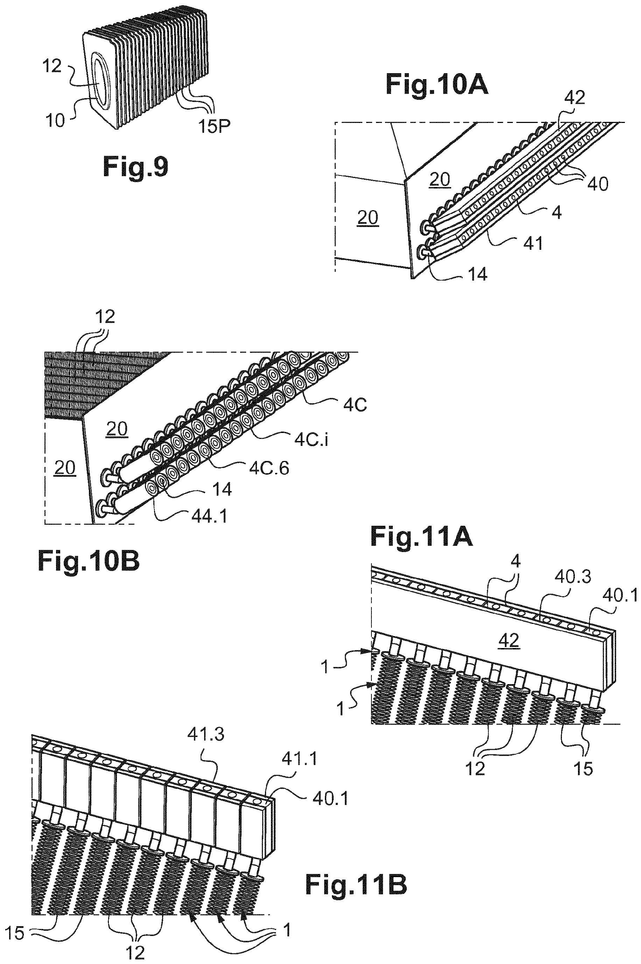

Les tubes d'évaporateur 12 peuvent avoir une section transversale circulaire ou ovoïde (figure 9). Des tubes à section ovoïde ont pour avantage de minimiser la perte de charge dans le circuit de gaz/fumées et de réduire le pas d'espacement horizontal entre les tubes, et donc de réduire l'encombrement du système de récupération d'énergie selon l'invention.

Les modules thermoélectriques 4 mis en oeuvre peuvent être de forme planaire (figure 10A) ou de forme cylindrique annulaire 4C (figure 10B). Dans le cas d'une configuration annulaire, la face froide des modules 4C est en interface thermique avec une seule plaque froide 41 également de forme cylindrique annulaire (figure 10B). La configuration planaire est plus standard, la configuration annulaire permet à priori de poser moins de problèmes thermomécaniques.

Dans une configuration planaire des modules thermoélectriques 4 avec une pluralité de thermosiphons diphasiques 1, différents variantes avantageuses d'agencement de plaques froides 41, 42 et de pièces d'adaptation 40 peuvent être envisagées.

Ainsi, on peut envisager tout d'abord des plaques froides 41, 42 communes à l'ensemble des modules 4 (figure 11A) ou des plaques froides 41,1...41,i; 42,1...42,i propres à chaque module 4 (figure 11B). Une configuration avec plaques froides communes est moins coûteuse en matériel et en montage car elle permet d'avoir une paire de plaque froide unique par rangée de thermosiphons. Une configuration modulaire avec plaques froides propres à chaque module permet de la souplesse au niveau de la conception et simplifie la maintenance.

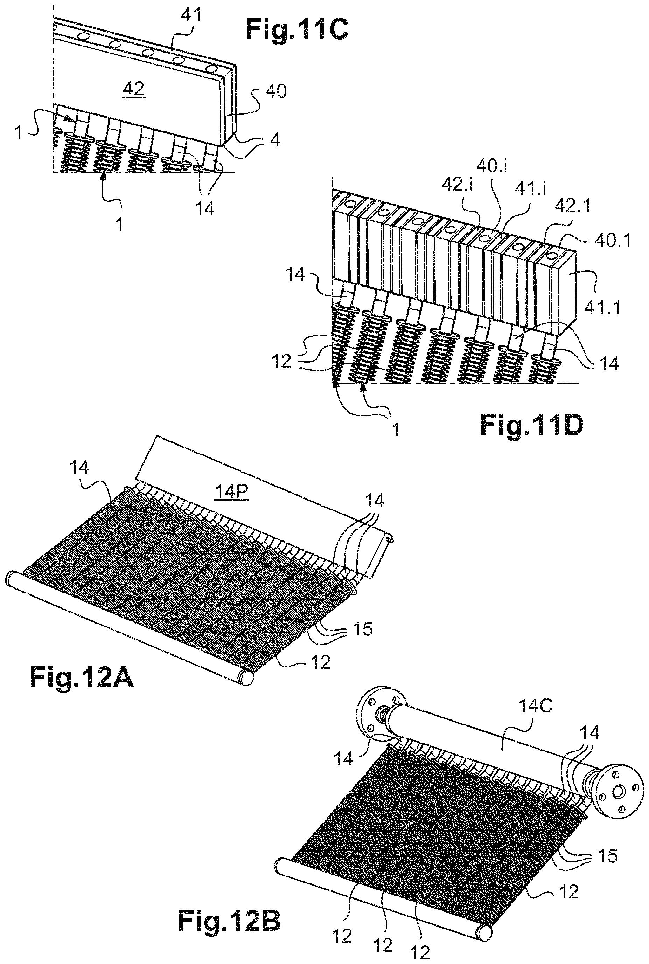

On peut envisager une pièce d'adaptation 4 par condenseur 14 de thermosiphon (figures 11A, 11B, 11D) ou une pièce d'adaptation 4 commune à une rangée de condenseurs 14 de thermosiphons (figure 11C). Une configuration avec une pièce d'adaptation 4 commune et des plaques froides 41, 42 à une rangée de condenseurs 14 de thermosiphons (figure 11C) permet d'avoir un bloc autonome par rangée, ce qui simplifie la conception et la maintenance.

Dans le cas d'une configuration modulaire, avec des plaques froides 41, 42 propres à chaque module thermoélectrique 4 et une pièce d'adaptation par module 4, l'orientation des modules 4 et plaques 41, 42 peut être modifiée. On peut ainsi avoir des modules 4 et plaques 41, 42 agencés soit transversalement à l'axe des thermosiphons (figure 11B) soit parallèlement à l'axe des thermosiphons (figure 11D). Un agencement des modules 4 et plaques 41, 42 parallèlement à l'axe des thermosiphons (figure 11D) permet d'avoir des modules 4 plus larges que ceux selon l'agencement transversal (figure 11B).

On peut envisager une configuration avec un seul condenseur plat 14P commun à plusieurs thermosiphons 1 (figure 12A). Cette configuration est adaptée aussi bien pour un système avec machine thermique 3 à cycle de Rankine ou avec modules thermoélectriques 4. Cette configuration permet d'avoir un seul bloc de condenseur 14P par rangée de thermosiphons et un seul remplissage en fluide thermosiphon. De plus, la résistance thermique est diminuée car on supprime les pièces d'adaptation cylindrique/plan entre les thermosiphons et les modules thermoélectriques et une interface thermique.

On peut aussi envisager une configuration avec un seul condenseur cylindrique 14C commun à plusieurs thermosiphons 1 (figure 12B). Cette configuration est plutôt adaptée pour un système avec machine thermique 3 à cycle de Rankine, car en plus d'un condenseur unique 14C pour le thermosiphon 1 sur la paroi externe du tube, on peut intégrer un évaporateur du générateur de vapeur 30 à l'intérieur de ce tube pour le cycle Rankine.

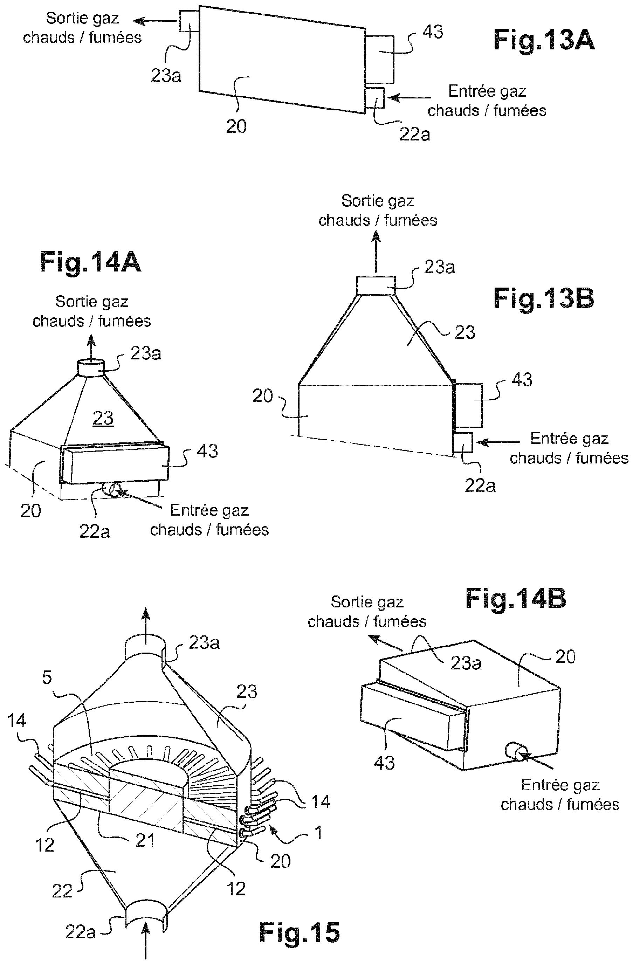

En ce qui concerne la circulation des gaz chauds/fumées, on peut prévoir plusieurs types de réalisation des entrées 22a, sorties 23a de l'enceinte 2. Les entrée 22a et sortie 23a peuvent être agencées toutes deux verticales (figures 6 et 6A), horizontales (figures 13A, 14B), ou avec l'une 22a horizontale et l'autre 23a à la verticale (figures 11B, 12A.

Le conduit 20 peut être parallélépipédique avec les thermosiphons 1 agencés dans le sens de l'écoulement des gaz/fumées (figure 14A), ou perpendiculaires au sens d'écoulement des gaz (figure 14B).

On peut enfin envisager une répartition radiale, de préférence uniforme, des thermosiphons diphasiques 4 dans un conduit 20 de circulation de gaz/fumées de forme annulaire (figure 15).

D'autres variantes et améliorations peuvent être prévues sans pour autant sortir du cadre de l'invention tel que défini par les revendications.

### REFERENCES CITEES

[1] : Bonjour J, Lefevre F, Sartre V, Bertin Y, Romestant C, Ayel V et Platel V, « Systèmes Diphasiques De Contrôle Thermique - Thermosiphons Et Caloducs », Techniques de l'ingénieur, Vol. BE9545, 2011 ;
[2]: Matsubara K et Matsuura M, « Thermoelectric applications to vehicles », Thermoelectrics handbook, Rowe, DM, Taylor and Francis, 2006 ;
[3]: Ismail BI et Ahmed WH, « Thermoelectric Power Generation Using Waste-Heat Energy As an Alternative Green Technology », Recent Patents on Electrical Engineering, Vol. 2, pp.27-39, 2009 ;
[4]:https://www1.eere.energy.gov/vehiclesandfuels/pdfs/thermoelectrics_app_2009/thursda y/shihokim.pdf;
[5]: Rowe D, Matsuura M, Thermoelectrics handbook, Rowe, DM, Taylor and Francis, 2006;
[6]: Reay D, Kew P, « Heat pipes - Theory, design and applications », Butterworth-Heinemann, 2006;
[7]: Bricard A, Gruss J et Manificat A, « Recent Advances in Heat Pipes for Hybrid Heat Pipe Heat Exchanger », 7th International heat pipe conference, Vol. 2; Materials and applications; 109-118, 1993;
[8]: Sjhakourzadeh K, « Techniques de fluidisation », Techniques de l'ingénieur J 3390-2, 2002 ;
[9]: Antonini G, « Lits fluidisés - Transferts de masse et de chaleur », Techniques de l'ingénieur BE 8 256, 2007;
[10]: Navarro J, « Comportement d'un échangeur de chaleur à lit fluidisé en milieu encrassant, Application aux récupérateurs de chaleur sur fumées industrielles » Thèse Université Technologique de Compiègne, 1986.

## Revendications

1. Système de récupération de l'énergie de la chaleur de fumée(s) et/ou de gaz chaud(s) comportant :
- une enceinte (2) de réalisation et de confinement d'un lit fluidisé (5) intégrant un conduit (20) de circulation en lit fluidisé (5) de fumée(s) et/ou de gaz chaud, l'enceinte (2) comportant dans sa partie inférieure, en dessous du conduit (20), une portion (22) divergente avec une entrée (22a) pour l'arrivée des gaz chauds et/ou fumées chaudes dans le conduit (20), dans sa partie supérieure une portion (23) convergente avec une sortie 23a pour la sortie des fumées refroidies, et à la jonction entre la portion d'entrée (22) et le conduit (20), une grille de fluidisation sous la forme d'une tôle perforée (21), dont la fonction est de contenir le lit fluidisé au repos et d'assurer sa fluidisation lors du passage des gaz/fumées ;
- au moins un thermosiphon diphasique (1) ou au moins un caloduc assisté par la gravité, dont la zone de chauffage, dite évaporateur (12), est agencée à l'intérieur du conduit tandis que la zone de refroidissement, dite condenseur (14), est agencée à l'extérieur du conduit,
- une machine thermique (3) apte à fonctionner selon un cycle thermodynamique dit de Rankine, la machine thermique comportant un générateur de vapeur (30) intégrant le(s) condenseur(s) du (des) thermosiphon(s) diphasique(s) ou du (des) caloduc(s) assisté(s) par la gravité ;
système dans lequel la hauteur du lit fluidisé est calculée de manière à ce que chaque tube (14) de thermosiphon (1) ou de caloduc assisté par la gravité soit complètement immergées dans le lit fluidisé en fonctionnement.

2. Système de récupération de l'énergie de la chaleur de fumée(s) et/ou de gaz chaud(s) comportant :
- une enceinte (2) de réalisation et de confinement d'un lit fluidisé (5) intégrant un conduit (20) de circulation en lit fluidisé (5) de fumée(s) et/ou de gaz chaud, l'enceinte (2) comportant dans sa partie inférieure, en dessous du conduit (20), une portion (22) divergente avec une entrée (22a) pour l'arrivée des gaz chauds et/ou fumées chaudes dans le conduit (20), dans sa partie supérieure une portion (23) convergente avec une sortie 23a pour la sortie des fumées refroidies, et à la jonction entre la portion d'entrée (22) et le conduit (20), une grille de fluidisation sous la forme d'une tôle perforée (21), dont la fonction est de contenir le lit fluidisé au repos et d'assurer sa fluidisation lors du passage des gaz/fumées;
- au moins un thermosiphon diphasique (1) ou au moins un caloduc assisté par la gravité, dont la zone de chauffage, dite évaporateur (12), est agencée à l'intérieur du conduit tandis que la zone de refroidissement, dite condenseur (14), est agencée à l'extérieur du conduit,
- une pompe à chaleur (3') comportant un générateur de vapeur (30) intégrant le(s) condenseur(s) du(des) thermosiphon(s) diphasique(s) ou du (des) caloduc(s) assisté(s) par la gravité ;
système dans lequel la hauteur du lit fluidisé est calculée de manière à ce que chaque tube (14) de thermosiphon (1) ou de caloduc assisté par la gravité soit complètement immergées dans le lit fluidisé en fonctionnement.

3. Système de récupération de l'énergie de la chaleur de fumée(s) et/ou de gaz chaud(s) comportant :
- une enceinte (2) de réalisation et de confinement d'un lit fluidisé (5) intégrant un conduit (20) de circulation en lit fluidisé (5) de fumée(s) et/ou de gaz chaud, l'enceinte (2) comportant dans sa partie inférieure, en dessous du conduit (20), une portion (22) divergente avec une entrée (22a) pour l'arrivée des gaz chauds et/ou fumées chaudes dans le conduit (20), dans sa partie supérieure une portion (23) convergente avec une sortie 23a pour la sortie des fumées refroidies, et à la jonction entre la portion d'entrée (22) et le conduit (20), une grille de fluidisation sous la forme d'une tôle perforée (21), dont la fonction est de contenir le lit fluidisé au repos et d'assurer sa fluidisation lors du passage des gaz/fumées;
- au moins un thermosiphon diphasique (1) ou au moins un caloduc assisté par la gravité, dont la zone de chauffage, dite évaporateur (12), est agencée à l'intérieur du conduit tandis que la zone de refroidissement, dite condenseur (14), est agencée à l'extérieur du conduit,
- au moins un module thermoélectrique (4), comportant deux faces principales, dont une, dite face froide, et l'autre, dite face chaude, la face chaude étant couplée thermiquement avec le(s) condenseur(s) du (des) thermosiphon(s) diphasique(s) ou du (des) caloduc(s) assisté(s) par la gravité ;
système dans lequel la hauteur du lit fluidisé est calculée de manière à ce que chaque tube (14) de thermosiphon (1) ou de caloduc assisté par la gravité soient complètement immergées dans le lit fluidisé en fonctionnement.

4. Système selon la revendication 3, le(s) module(s) thermoélectrique(s) étant de forme générale plane, la face chaude d'un module étant couplée thermiquement avec le(s) condenseur(s) du (des) thermosiphon(s) diphasique(s) ou du (des) caloduc(s) assisté(s) par la gravité, par une pièce d'adaptation (40) à la forme de l'enveloppe du(des) thermosiphon(s) diphasique(s), tandis que sa face froide est couplée thermiquement directement à une plaque, dite plaque froide (41, 42).

5. Système selon la revendication 4, comportant au moins deux modules thermoélectriques (4) de forme plane agencés de part et d'autre d'un même condenseur (14) de thermosiphon(s) diphasique(s) ou de caloduc(s) assisté(s) par la gravité, les faces chaudes des deux modules étant couplées thermiquement avec le condenseur par une seule pièce d'adaptation (40) à la forme de l'enveloppe du condenseur, tandis que la face froide de l'un des deux modules est couplée thermiquement directement à une première plaque froide (41) et la face froide de l'autre des deux modules est couplée thermiquement directement à une deuxième plaque froide (42), les première et deuxième plaques froides étant agencées de part et d'autre du condenseur.

6. Système selon la revendication 3, le(s) module(s) thermoélectrique(s) étant de forme générale cylindrique ou ovoïde, la face chaude d'un module étant couplée thermiquement directement avec le(s) condenseur(s) du (des) thermosiphon(s) diphasique(s) ou du (des) caloduc(s) assisté(s) par la gravité, dont l'enveloppe est de section cylindrique ou ovoïde, tandis que sa face froide est couplée thermiquement directement à une pièce à section cylindrique ou à section ovoïde, dite pièce froide.

7. Système selon l'une des revendications précédentes, comportant une pluralité de thermosiphons diphasiques ou de caloducs assistés par la gravité, alignés selon au moins une rangée, avec leurs évaporateurs et leurs zones adiabatiques allongées selon une direction transversale à la section du conduit.

8. Système selon la revendication 7, comportant un condenseur commun à la pluralité des thermosiphons diphasiques ou des caloducs assistés par la gravité.

9. Système selon la revendication 8, la forme de l'enveloppe (14P) du condenseur commun étant de forme générale parallélépipédique.

10. Système selon la revendication 8, la forme de l'enveloppe (14C) du condenseur commun étant de forme générale cylindrique.

11. Système selon l'une des revendications précédentes, le(s) thermosiphon(s) diphasique(s) ou le (les) caloduc(s) assisté(s) par la gravité étant de forme allongée droite, le (les) condenseur(s) (14) étant agencé(s) au-dessus du (des) évaporateur(s) (12).

12. Système selon l'une des revendications 1 à 10, le(s) thermosiphon(s) diphasique(s) ou le (les) caloduc(s) assisté(s) par la gravité étant de forme allongée droite dans leur partie évaporateur (12) et coudée dans leur partie condenseur (14), l'(les) évaporateur(s) (12) étant agencé(s) à l'horizontal et le(s) condenseur(s) (14) étant incliné(s) vers le haut.

13. Installation comportant un système selon l'une quelconque des revendications précédentes, comprenant un dispositif de dépollution du (des) gaz chaud(s) et/ou fumée(s) à base de catalyseurs intégrés dans le lit fluidisé, de préférence adaptés à l'élimination de NOx (NO, N02 et N20) et du CO.

14. Application du système selon l'une quelconque des revendications 1 à 12 ou de l'installation selon la revendication 13, pour la récupération d'énergie de la chaleur fumées industrielles encrassantes ou issues de moteur diesel.

## Patentansprüche

1. System zur Rückgewinnung der Energie der Wärme von Rauchgas(en) und/oder von Heißgas(en), welches umfasst:
- einen Behälter (2) zur Herstellung und Einschließung eines Wirbelbetts (5), in den ein Kanal (20) zur Zirkulation von Rauchgas (en) und/oder von Heißgas im Wirbelbett (5) integriert ist, wobei der Behälter (2) in seinem unteren Teil, unterhalb des Kanals (20), einen sich aufweitenden Abschnitt (22) mit einem Eingang (22a) für den Eintritt der Heißgase und/oder heißen Rauchgase in den Kanal (20), in seinem oberen Teil einen sich aufweitenden Abschnitt (23) mit einem Ausgang (23a) für den Austritt der abgekühlten Rauchgase und an der Verbindungsstelle zwischen dem Eintrittsabschnitt (22) und dem Kanal (20) einen Wirbelschichtrost in der Form eines perforierten Bleches (21), dessen Aufgabe es ist, das Wirbelbett im Ruhezustand aufzunehmen und seine Verflüssigung beim Hindurchströmen der Gase/Rauchgase sicherzustellen, aufweist;
- wenigstens einen Zwei-Phasen-Thermosiphon (1) oder wenigstens ein schwerkraftgetriebenes Wärmerohr, dessen Erwärmungsbereich, Verdampfer (12) genannt, im Inneren des Kanals angeordnet ist, während der Kühlbereich, Kondensator (14) genannt, außerhalb des Kanals angeordnet ist,
- eine Wärmekraftmaschine (3), die in der Lage ist, nach einem thermodynamischen Kreisprozess, Rankine-Kreisprozess genannt, zu arbeiten, wobei die Wärmekraftmaschine einen Dampferzeuger (30) aufweist, in den der (die) Kondensator (en) des (der) Zwei-Phasen-Thermosiphons oder des (der) schwerkraftgetriebenen Wärmerohre(s) integriert ist (sind);
wobei in diesem System die Höhe des Wirbelbetts derart berechnet wird, dass im Betrieb jedes Rohr (14) des Thermosiphons (1) oder des schwerkraftgetriebenen Wärmerohres vollständig in das Wirbelbett eingetaucht ist.

2. System zur Rückgewinnung der Energie der Wärme von Rauchgas(en) und/oder von Heißgas(en), welches umfasst:
- einen Behälter (2) zur Herstellung und Einschließung eines Wirbelbetts (5), in den ein Kanal (20) zur Zirkulation von Rauchgas(en) und/oder von Heißgas im Wirbelbett (5) integriert ist, wobei der Behälter (2) in seinem unteren Teil, unterhalb des Kanals (20), einen sich aufweitenden Abschnitt (22) mit einem Eingang (22a) für den Eintritt der Heißgase und/oder heißen Rauchgase in den Kanal (20), in seinem oberen Teil einen sich aufweitenden Abschnitt (23) mit einem Ausgang (23a) für den Austritt der abgekühlten Rauchgase und an der Verbindungsstelle zwischen dem Eintrittsabschnitt (22) und dem Kanal (20) einen Wirbelschichtrost in der Form eines perforierten Bleches (21), dessen Aufgabe es ist, das Wirbelbett im Ruhezustand aufzunehmen und seine Verflüssigung beim Hindurchströmen der Gase/Rauchgase sicherzustellen, aufweist;
- wenigstens einen Zwei-Phasen-Thermosiphon (1) oder wenigstens ein schwerkraftgetriebenes Wärmerohr, dessen Erwärmungsbereich, Verdampfer (12) genannt, im Inneren des Kanals angeordnet ist, während der Kühlbereich, Kondensator (14) genannt, außerhalb des Kanals angeordnet ist,
- eine Wärmepumpe (3'), die einen Dampferzeuger (30) aufweist, in den der (die) Kondensator(en) des (der) Zwei-Phasen-Thermosiphons oder des (der) schwerkraftgetriebenen Wärmerohre(s) integriert ist (sind);
wobei in diesem System die Höhe des Wirbelbetts derart berechnet wird, dass im Betrieb jedes Rohr (14) des Thermosiphons (1) oder des schwerkraftgetriebenen Wärmerohres vollständig in das Wirbelbett eingetaucht ist.

3. System zur Rückgewinnung der Energie der Wärme von Rauchgas(en) und/oder von Heißgas(en), welches umfasst:
- einen Behälter (2) zur Herstellung und Einschließung eines Wirbelbetts (5), in den ein Kanal (20) zur Zirkulation von Rauchgas(en) und/oder von Heißgas im Wirbelbett (5) integriert ist, wobei der Behälter (2) in seinem unteren Teil, unterhalb des Kanals (20), einen sich aufweitenden Abschnitt (22) mit einem Eingang (22a) für den Eintritt der Heißgase und/oder heißen Rauchgase in den Kanal (20), in seinem oberen Teil einen sich aufweitenden Abschnitt (23) mit einem Ausgang (23a) für den Austritt der abgekühlten Rauchgase und an der Verbindungsstelle zwischen dem Eintrittsabschnitt (22) und dem Kanal (20) einen Wirbelschichtrost in der Form eines perforierten Bleches (21), dessen Aufgabe es ist, das Wirbelbett im Ruhezustand aufzunehmen und seine Verflüssigung beim Hindurchströmen der Gase/Rauchgase sicherzustellen, aufweist;
- wenigstens einen Zwei-Phasen-Thermosiphon (1) oder wenigstens ein schwerkraftgetriebenes Wärmerohr, dessen Erwärmungsbereich, Verdampfer (12) genannt, im Inneren des Kanals angeordnet ist, während der Kühlbereich, Kondensator (14) genannt, außerhalb des Kanals angeordnet ist,
- wenigstens ein thermoelektrisches Modul (4), das zwei Hauptseiten aufweist, von denen die eine "kalte Seite" genannt wird und die andere "heiße Seite" genannt wird, wobei die heiße Seite mit dem (den) Kondensator(en) des (der) Zwei-Phasen-Thermosiphons oder des (der) schwerkraftgetriebenen Wärmerohre(s) thermisch gekoppelt ist;
wobei in diesem System die Höhe des Wirbelbetts derart berechnet wird, dass im Betrieb jedes Rohr (14) des Thermosiphons (1) oder des schwerkraftgetriebenen Wärmerohres vollständig in das Wirbelbett eingetaucht ist.

4. System nach Anspruch 3, wobei das (die) thermoelektrische(n) Modul(e) eine ebene allgemeine Form hat (haben), wobei die heiße Seite eines Moduls mit dem (den) Kondensator(en) des (der) Zwei-Phasen-Thermosiphons oder des (der) schwerkraftgetriebenen Wärmerohre(s) durch ein Teil zur Anpassung (40) an die Form der Umhüllung des (der) Zwei-Phasen-Thermosiphons thermisch gekoppelt ist, während seine kalte Seite direkt mit einer Platte, "kalte Platte" (41, 42) genannt, thermisch gekoppelt ist.

5. System nach Anspruch 4, welches wenigstens zwei thermoelektrische Module (4) von ebener Form umfasst, die beiderseits ein und desselben Kondensators (14) eines (von) Zwei-Phasen-Thermosiphons oder eines (von) schwerkraftgetriebenen Wärmerohres (Wärmerohren) angeordnet sind, wobei die heißen Seiten der zwei Module mit dem Kondensator durch ein einziges Teil zur Anpassung (40) an die Form der Umhüllung des Kondensators thermisch gekoppelt sind, während die kalte Seite des einen der zwei Module direkt mit einer ersten kalten Platte (41) thermisch gekoppelt ist und die kalte Seite des anderen der zwei Module direkt mit einer zweiten kalten Platte (42) thermisch gekoppelt ist, wobei die erste und die zweite kalte Platte beiderseits des Kondensators angeordnet sind.

6. System nach Anspruch 3, wobei das (die) thermoelektrische(n) Modul(e) eine zylindrische oder eiförmige allgemeine Form hat (haben), wobei die heiße Seite eines Moduls mit dem (den) Kondensator(en) des (der) Zwei-Phasen-Thermosiphons oder des (der) schwerkraftgetriebenen Wärmerohre(s), dessen (deren) Umhüllung einen zylindrischen oder ovalen Querschnitt hat, direkt thermisch gekoppelt ist, während seine kalte Seite mit einem Teil mit zylindrischem Querschnitt oder mit ovalem Querschnitt, "kaltes Teil" genannt, direkt thermisch gekoppelt ist.

7. System nach einem der vorhergehenden Ansprüche, welches mehrere Zwei-Phasen-Thermosiphons oder schwerkraftgetriebene Wärmerohre aufweist, die in wenigstens einer Reihe angeordnet sind, wobei ihre Verdampfer und ihre adiabatischen Bereiche in einer Richtung quer zum Querschnitt des Kanals langgestreckt sind.

8. System nach Anspruch 7, welches einen Kondensator aufweist, der den mehreren Zwei-Phasen-Thermosiphons oder schwerkraftgetriebenen Wärmerohren gemeinsam ist.

9. System nach Anspruch 8, wobei die Form der Umhüllung (14P) des gemeinsamen Kondensators eine parallelepipedförmige allgemeine Form ist.

10. System nach Anspruch 8, wobei die Form der Umhüllung (14C) des gemeinsamen Kondensators eine zylindrische allgemeine Form ist.

11. System nach einem der vorhergehenden Ansprüche, wobei der (die) Zwei-Phasen-Thermosiphon(s) oder das (die) schwerkraftgetriebene(n) Wärmerohr(e) eine gerade lang gestreckte Form hat (haben), wobei der (die) Kondensator(en) (14) oberhalb des (der) Verdampfer(s) (12) angeordnet ist (sind).

12. System nach einem der Ansprüche 1 bis 10, wobei der (die) Zwei-Phasen-Thermosiphon(s) oder das (die) schwerkraftgetriebene(n) Wärmerohr(e) in ihrem Verdampferteil (12) eine gerade lang gestreckte und in ihrem Kondensatorteil (14) eine abgewinkelte Form hat (haben), wobei der (die) Verdampfer (12) horizontal angeordnet ist (sind) und der (die) Kondensator(en) (14) nach oben geneigt ist (sind).

13. Anlage, welche ein System nach einem der vorhergehenden Ansprüche aufweist und eine Vorrichtung zur Reinigung des (der) Heißgase(s) und/oder Rauchgase (s) auf der Basis von in das Wirbelbett integrierten Katalysatoren umfasst, die vorzugsweise zur Entfernung von NOx (NO, NO2 und N2O) und von CO ausgelegt sind.

14. Anwendung des Systems nach einem der Ansprüche 1 bis 12 oder der Anlage nach Anspruch 13 zur Rückgewinnung von Energie der Wärme von verunreinigenden industriellen Rauchgasen oder von einem Dieselmotor stammenden Abgasen.

## Claims

1. System for recuperating energy from the heat of hot gas(es) and/or fume(s), comprising:
- an enclosure (2) in which to create and contain a fluidized bed (5) incorporating a pipe (20) in which hot gas and/or fume(s) circulate in a fluidized bed (5), the enclosure (2) comprising in its lower part, below the pipe (20), a divergent portion (22) with an inlet (22a) for the arrival of the hot gases and/or hot fumes into the pipe (20), in its upper part a convergent portion (23) with an outlet (23a) for the outlet of the cooled fumes, and, at the junction where the inlet portion (22) and the pipe (20) meet, a fluidization grating in the form of a perforated sheet (21) the purpose of which is to contain the fluidized bed at rest and to fluidize it as the gases/fumes pass;
- at least one biphasic thermosiphon (1) or at least one gravity-assisted heat pipe, of which the heating zone, referred to as the evaporator (12), is arranged inside the pipe whereas the cooling zone, referred to as the condenser (14) is arranged outside the pipe,
- a heat machine (3), able to operate according to what is known as the Rankine thermodynamic cycle, the heat machine comprising a steam generator (30) incorporating the condenser (5) of the biphasic thermosiphon(s) or of the gravity-assisted heat pipe (5) ;
in which system the height of the fluidized bed is calculated so that each tube (14) of a thermosiphon (1) or of a gravity-assisted heat pipe is fully immersed in the said fluidized bed during operation.

2. System for recuperating energy from the heat of hot gas(es) and/or fume(s), comprising:
- an enclosure (2) in which to create and contain a fluidized bed (5) incorporating a pipe (20) in which hot gas and/or fume(s) circulate in a fluidized bed (5), the enclosure (2) comprising in its lower part, below the pipe (20), a divergent portion (22) with an inlet (22a) for the arrival of the hot gases and/or hot fumes into the pipe (20), in its upper part a convergent portion (23) with an outlet (23a) for the outlet of the cooled fumes, and, at the junction where the inlet portion (22) and the pipe (20) meet, a fluidization grating in the form of a perforated sheet (21) the purpose of which is to contain the fluidized bed at rest and to fluidize it as the gases/fumes pass;
- at least one biphasic thermosiphon (1) or at least one gravity-assisted heat pipe, of which the heating zone, referred to as the evaporator (12), is arranged inside the pipe whereas the cooling zone, referred to as the condenser (14) is arranged outside the pipe,
- a heat pump (3') comprising a steam generator (30) incorporating the condenser(s) of the biphasic thermosiphon(s) or of the gravity-assisted heat pipe (5) ;
in which system the height of the fluidized bed is calculated so that each tube (14) of a thermosiphon (1) or of a gravity-assisted heat pipe is fully immersed in the said fluidized bed during operation.

3. System for recuperating energy from the heat of hot gas(es) and/or fume(s), comprising:
- an enclosure (2) in which to create and contain a fluidized bed (5) incorporating a pipe (20) in which hot gas and/or fume(s) circulate in a fluidized bed (5), the enclosure (2) comprising in its lower part, below the pipe (20), a divergent portion (22) with an inlet (22a) for the arrival of the hot gases and/or hot fumes into the pipe (20), in its upper part a convergent portion (23) with an outlet (23a) for the outlet of the cooled fumes, and, at the junction where the inlet portion (22) and the pipe (20) meet, a fluidization grating in the form of a perforated sheet (21) the purpose of which is to contain the fluidized bed at rest and to fluidize it as the gases/fumes pass;
- at least one biphasic thermosiphon (1) or at least one gravity-assisted heat pipe, of which the heating zone, referred to as the evaporator (12), is arranged inside the pipe whereas the cooling zone, referred to as the condenser (14) is arranged outside the pipe,
- at least one thermoelectric module (4) comprising two main faces, of which one is referred to as the cold face and the other is referred to as the hot face, the hot face being thermally coupled with the condenser(s) of the biphasic thermosiphon(s) or of the gravity-assisted heat pipe(s);
in which system the height of the fluidized bed is calculated so that each tube (14) of a thermosiphon (1) or of a gravity-assisted heat pipe is fully immersed in the said fluidized bed during operation.

4. System according to Claim 3, the thermoelectric module(s) being of planar overall shape, the hot face of one module being thermally coupled to the condenser(s) of the biphasic thermosiphon(s) or of the gravity-assisted heat pipe(s) by an adapter piece (40) in the shape of the shell of the biphasic thermosiphon(s), whereas its cold face is thermally coupled directly to a plate referred to as the cold plate (41, 42).

5. System according to Claim 4, comprising at least two thermoelectric modules (4) of planar shape arranged one on each side of the one same condenser (14) of the biphasic thermosiphon(s) or of the gravity-assisted heat pipe (5), the hot faces of the two modules being thermally coupled to the condenser by a single adapter piece (40) in the shape of the shell of the condenser, whereas the cold face of one of the two modules is thermally coupled directly to a first cold plate (41) and the cold face of the other of the two modules is thermally coupled directly to a second cold plate (42), the first and second cold plates being arranged on either side of the condenser.

6. System according to Claim 3, the thermoelectric module(s) being of cylindrical or ovoid overall shape, the hot face of one module being thermally coupled directly to the condenser(s) of the biphasic thermosiphon(s) or of the gravity-assisted heat pipe(s), the shell of which is of cylindrical or ovoid cross section, whereas its cold face is thermally coupled directly to a piece having a cylindrical cross section or an ovoid cross section, referred to as the cold piece.

7. System according to one of the preceding claims, comprising a plurality of biphasic thermosiphons or of gravity-assisted heat pipes aligned in at least one row, with their evaporators and their adiabatic zones lined up in a direction transverse to the cross section of the pipe.

8. System according to Claim 7, comprising a condenser in common to the plurality of biphasic thermosiphons or gravity-assisted heat pipes.

9. System according to Claim 8, the shape of the shell (14P) of the common condenser being of parallelepipedal overall shape.

10. System according to Claim 8, the shape of the shell (14C) of the common condenser being of cylindrical overall shape.

11. System according to one of the preceding claims, the biphasic thermosiphon(s) or the gravity-assisted heat pipe(s) being of straight elongate shape, the condenser(s) (14) being arranged above the evaporator (s) (12).

12. System according to one of Claims 1 to 10, the biphasic thermosiphon(s) or the gravity-assisted heat pipe(s) being of straight elongate shape in their evaporator part (12) and elbowed in their condenser part (14), the evaporator (s) (12) being arranged horizontally and the condenser(s) (14) being inclined upwards.

13. Installation comprising a system according to any one of the preceding claims, comprising a device for the pollution control of the hot gas(es) and/or fume(s), based on catalysts incorporated into the fluidized bed, preferably suited to the elimination of NOx (NO, NO2 and N2O) and CO.

14. Application of the system according to any one of Claims 1 to 12 or of the installation according to Claim 13 to the recuperation of energy from the heat of foul industrial fumes or fumes emanating from a diesel engine.
